# EUROPEAN PATENT SPECIFICATION

(11) **EP 4 337 857 B1**
(45) Date of publication and mention of the grant of the patent: **27.08.2025**
(21) Application number: 22730063.9
(22) Date of filing: 03.05.2022
(51) Int. Cl.: F03D 13/25, B66C 1/10

(54) **VESSEL, DEVICE AND METHOD FOR THE MANIPULATION OF WIND TURBINE BLADES**
SCHIFF, VORRICHTUNG UND VERFAHREN ZUR MANIPULATION VON WINDTURBINENSCHAUFELN
NAVIRE, DISPOSITIF ET PROCÉDÉ DE MANIPULATION DE PALES D'ÉOLIENNE

(30) Priority: 12.05.2021 NL 2028204
(43) Date of publication of application: 20.03.2024
(73) Proprietor: Itrec B.V., 3115 HH Schiedam (NL)
(72) Inventor: WIJNING, Diederick Bernardus, 3115 HH SCHIEDAM (NL)
(74) Representative: EP&C
(86) International application number: PCT/EP2022/061854
(87) International publication number: WO 2022/238181

(56) References cited:
- EP-A1- 2 585 712
- EP-B1- 2 585 712
- BE-B1- 1 021 796
- US-B2- 8 640 340

## Description

The invention relates to the manipulation of a rotor blade of an offshore wind turbine in installation, removal, or replacement of the blade at an offshore location.

In a known installation process for a rotor blade of a horizontal axis offshore wind turbine, the blade is loaded onto a deck of a vessel, e.g. a jack-up vessel, stored on a deck thereof, and transferred to the offshore location of the associated offshore wind turbine by navigating the vessel. The vessel is then arranged in the proximity of the tower of the wind turbine, commonly the wind turbine being a fixed wind turbine having a foundation placed in or on the seabed. The blade is then connected to a lifting tool that engages the wind turbine blade at or near the center of gravity thereof. Often is this at about 1/3 of the length away from the root end of the blade. The blade is then suspended from a crane of the vessel by connecting the lifting tool to the one or more hoisting cables of the crane, and is lifted by operating the crane to the height of the hub of the wind turbine. The root end of the blade is finally connected to the hub of the wind turbine, often via bolts at the root end, and subsequently the blade is released from the lifting tool. For removal of the blade, a reversed process is performed. The wind turbine blade is often installed in a horizontal orientation, i.e. a three o'clock position or a nine o'clock position.

The hub height of an offshore horizontal axis wind turbine is often over 80 meters, often around 100 meters, above sea level, which means that in the known blade installation approaches the crane from which the blade is suspended generally extends significantly above this height. This requires cranes with very tall booms. The accuracy required for the mating of the blade root with the hub, combined with the weight and the size of the blade, places high demands on the crane, e.g. on the mechanical strength of the crane boom. For example, the long, elongate shape of the rotor blade complicates the manipulation of the blade, while being lifted and while being accurately aligned with the hub for connection thereto. For example, a blade of a three-blades horizontal axis 10 MW turbine is around 80 meters long. Accurate positioning is required, given that the interconnection of the hub and the blade involves bolt connections between the root of the blade and the pitch bearing of the hub. External forces that are exerted on the vessel, the crane, and/or the blade, such as wind and sea motions, make a controlled manipulation of the wind turbine blade throughout the process even more challenging. Effectively, the prior art approach is hampered by a narrow weather window wherein the installation can be performed.

To deal with the mentioned challenges, the present invention aims to provide measures which facilitate the manipulation of a rotor blade during installation and removal from a horizontal axis offshore wind turbine.

The present invention also aims to lower the requirements of the vessel and equipment used for blade manipulation - for example in terms of dimensional requirements and material strength.

The present invention also aims to provide an alternative to the prior art solutions, examples of which are known for instance from EP 2 585 712 A1 and BE 1 021 796 B1.

In a first aspect thereof, the invention provides a method for installing a rotor blade according to claim 1.

The method comprises arranging the vessel with a stern of the hull of the vessel facing the wind turbine at a distance from a tower of the wind turbine in an X-direction of the vessel. Preferably, the hull of the vessel is aligned with the wind turbine, for example with the tower, in the X-direction. The X-direction of the vessel is the longitudinal direction of the vessel, which extends from the stern towards the bow.

The method comprises holding the rotor blade in a Y-direction of the vessel as well as horizontally on a free end of a lift arm of a blade manipulator device which is mounted at the stern of the vessel.

Preferably, the blade manipulator device is mounted on a cantilever that is arranged at the stern, so that the device can be easily brought as close as possible to the wind turbine.

The Y-direction of the vessel is the transverse direction of the vessel, which extends from port to starboard and vice versa.

The blade is held on the free end of the lifting arm. This may involve the use of a cable from which the blade, e.g. via a lifting tool, is suspended. Preferably, the blade is not suspended by a cable from the free end, but is secured to the free end via a coupler that supports, e.g. releasably, a lifting tool that accommodates the blade. Preferably, the coupler has a coupler pivot axis that is parallel to the lift arm pivot axis as will be explained herein in more detail below.

Preferably, during installation using the manipulator device, the blade is held to the rear of the lift arm, that is, at the side of the lift arm that faces the wind turbine.

The lift arm is connected to a vertical mast of the blade manipulator device.

As the tower of the wind turbine faces the stern of the vessel rather than a longitudinal side of the vessel, maneuvering of the vessel to bring it in the right position is enhanced. For instance, in order to be close to tower, the vessel may be moved in its longitudinal direction, which can be done with ease. Furthermore, this orientation of the vessel, enables to utilize the starboard and/or port side of the vessel, e.g. for storage of objects, in particular for storage of wind turbine blades with their length in X-direction. For example, a rack is mounted to a longitudinal side of the vessel for storing therein one or more wind turbine blades horizontally and with their length in X-direction. The length of the blade or blades can, in practical embodiments, be greater than the length of the hull of the vessel, e.g. the stored blade or blades extending beyond the bow of the vessel. In case, as preferred, the vessel is a jack-up vessel, the rack is preferably located outward of the legs of the vessel so that the legs do not interfere with handling of the blades. For example, as discussed herein, the vessel is equipped with a crane that transfer a blade from the rack to the blade manipulator device.

The blade being secured by a coupler to the free end of the lift arm rather than being suspended from a cable, may enhance the control of the rotor blade during installation, e.g. reduce the influence of the wind on the position and orientation of the rotor blade. As a result, for example, the use of one or more taglines connected to the blade may be dispensed with, e.g. as less or no compensation of movements due to the wind are needed.

A further advantage of the blade manipulator device is that the height of the blade manipulator device, in particular of the mast thereof, may, in appropriate embodiments, be less than prior art cranes having a boom from which the wind turbine blade is suspended during installation of the blade. In these prior art cranes the boom tip commonly is significantly higher than the hub of the turbine, because there is height needed for the cable suspension between the tip and the blade. Relatively small dimensions, in particular a low height, and a light construction of the mast may be advantageous not only in terms of material savings, but may also improve the balance, control and efficiency of the vessel, e.g. during sailing. Furthermore, it may be possible to manipulate even heavier blades by a device with the same material requirements and height, which in view of the trend towards larger wind turbines, is desirable.

Preferably, the arranging of the vessel next to the wind turbine tower is done such that the mast of the blade manipulator device is aligned in the X-direction with the tower of the wind turbine.

The method comprises lifting the blade, which is maintained horizontally and extends in the Y-direction, towards the hub of the wind turbine, by upwardly displacing the free end of the lift arm, and thus the blade held by the free end, relative to the mast to an installation height of the rotor blade. This installation height corresponds to the hub height, as the blade is mounted to the hub to be installed. The lifting is achieved by actuating one or more lift arm drives of the blade manipulator device. To complete the installation, the method comprises mounting the lifted rotor blade to the hub of the wind turbine in a 3 o'clock position or a 9 o'clock position.

The upwards displacement of the free end of the lift arm may be done in two ways, of which only one or both may be performed in the method. The two ways are preferably combined to reach the installation height. In an example, the first and second way are simultaneously performed, or after one another.

In the first way, the upwardly displacing of the free end of the lift arm is carried out by pivoting the lift arm relative to the mast upwards around a pivot axis which extends in the X-direction of the vessel. Herein, to maintain the horizontal orientation of the blade during the pivoting of the lift arm, the blade is held at the free end such as to be pivotal around a pivot axis which is parallel to the pivot axis around which the lift arm is pivoted. This pivot axis thus also extends in the X-direction. As a result, when the lift arm is pivoted relative to the mast over a certain range of angles, the blade is pivotable relative to the lift arm over this range in the opposite direction, so that the orientation of the blade does not change and remains horizontal. Furthermore, because the lift arm is pivoted over an X-directed pivot axis, which is perpendicular to the Y-directed blade, the blade moves in the same vertical plane which contains the Y-direction during the pivoting. The blade thus maintains the same horizontal distance to the hub when considered in the X-direction. This, together with the maintained horizontal orientation in the Y-direction, may enhance the control of the positioning relative to the turbine, relative to current solutions wherein the orientation or the distance of the blade relative to the turbine in X-direction changes during the lift of the blade. In an example, the lift arm has an angle of between 30 and 80 degrees with the horizontal plane after the pivoting, for example between 40 and 60 degrees, for example around 45-50 degrees. In an example the lift arm has an angle of between -30 and -80 degrees with the horizontal plane prior to the pivoting, for example between -40 and -60 degrees, for example around -45 degrees.

In the second way, the lifting arm may be connected to the mast via a driven trolley that is vertically translatable along a vertical guide of the mast, and the upwardly displacing of the free end of the lift arm involves upwardly translating the lift arm along the vertical guide by driving an upwards translation of the trolley. Thus, the trolley is vertically moved along the mast by a drive of the blade manipulator device. Alike with the pivoting, the translation of the lift arm results in a movement of the blade in the same vertical plane in the Y-direction, and results in the horizontal orientation and the distance to the turbine in the X-direction to be maintained during the lift of the blade - which may benefit control of the blade position.

As indicated, the first and second way may be combined when installing a blade. For example, a part of the vertical motion is obtained by raising the trolley along the mast and a part by pivoting or swinging the lift arm.

The pivoting and the translating allow to controllably move the blade vertically while making use of the substantially stationary position and orientation of the mast during the lift through the connection of the blade to the mast via the lift arm, to control the desired position and orientation of the blade. Thus, when lifting the blade, the movement of the blade is restricted to follow the movement of the free end, as the blade is secured thereto. This is in contrast to lifting of the blade by suspending it from a hoisting cable that is free from the mast, by which the movement of the blade is restricted only from above by the cable suspension, so that the blade is susceptible to undue movement, e.g. caused by wind or vessel motion.

Preferably, the blade is moved in a vertical plane that is parallel to and to the rear of the plane of motion of the lift arm. In appropriate embodiments, the plane of the blade is close to the plane of the lift arm, which reduces the moment arm of the force exerted by the weight of the blade on the mast, as it is held relatively close to the mast. Therefore, bending stresses in the manipulator device may be reduced further, which may enable the mast to be constructed even lighter.

The invention enables that, in embodiments, after the upwardly displacing of the free end of the lift arm to the installation height, the free end of the lift arm, and therefore the held rotor blade, extends higher than a top of the mast. Thus, the lift arm then functions as an extension above the mast - so that the mast advantageously needs less height.

In an embodiment, the method further comprises, (just) prior to the mounting of the rotor blade, aligning the blade with a hub connection of the hub for the blade. For example, the blade is aligned to cause alignment between bolts on the root of the blade with bolt holes in the blade mounting of the hub. In an example this is done by moving the blade relative to the lift arm of the blade manipulator device, by actuating one or more alignment actuators of an alignment mechanism. This alignment mechanism may be integrated with the lift arm, the coupler, and/or the lifting tool that accommodates the blade during installation. For example, the alignment mechanism allows for alignment in any one or more of the X-, Y-, and/or Z-direction of the vessel. In an example this may be done by pivoting relative to the vessel the mast of the blade manipulator device, and thereby the lift arm mounted thereto, around a mast pivot axis in the X-direction of the vessel at the mount of the mast at the lower end thereof, over at most 3 degrees. Both examples may be applied in combination. The alignment by pivoting the mast relative to the vessel, is in particular envisaged in the case that the vessel is a jack-up vessel. The pivoting of the mast may therein be used to compensate for any slight inaccuracy in the jacking of the vessel by the jack-up legs, for example a slight non-verticality of the legs.

Preferably, the vessel faces the hub of the turbine. Preferably the blade is, considering the X-direction of the vessel, held by the lift arm between the wind turbine tower and the mast of the blade manipulator device. Thus, considering the X-direction of the vessel, and thus when viewed in the Y-direction onto the vessel and the turbine, the blade is between the tower and the mast.

Preferably, the blade is held between the vessel and the tower.

Preferably the mast is mounted on a rearmost edge of the vessel, e.g. on a cantilever at the stern of the hull of the vessel.

Preferably, the lift arm is mounted at the rear side of the mast, and thus between the mast and the wind turbine tower after arranging the vessel.

Preferably, the blade is held at the free end of the lift arm in a manner such that the blade extends in Y-direction and, preferably slightly, rearward of the lift arm. Thus, in the X-direction, the blade is between the lift arm and the tower.

It is noted here that throughout this disclosure, the terms front and forward in relation to the blade manipulator device denote an X-direction from the stern of the vessel towards the bow of the vessel.

In practical embodiments, it is desired to have as much as possible distance between the hull of the vessel and the tower of the turbine in the X-direction.

Preferably, to align the rotor blade in the Y-direction already prior to the mounting, the vessel is arranged in the X-direction at a distance to the tower such, that the blade is held near or in the vertical plane of the hub in the Y-direction, so that after the lift of the blade by pivoting and/or translating the lift arm, minimal corrective alignment movements of the blade are needed in the X-direction when the blade is already at the installation height. This may reduce the time at which the blade needs to be held at the installation height, so that the tower may be unloaded sooner from the weight of the blade.

Most preferably, the blade root is held aligned with a hub connection of the hub for the blade in the X-direction - that is, the blade is held in the Y-directed vertical plane of the hub connection.

Preferably, the vessel is a jack-up vessel, and the arranging of the vessel comprises the lowering of the jack-up legs and the raising of the hull of the vessel. As is known in the art, this makes that the hull of the vessel maintains a stationary position relative to the seabed, regardless of sea motions such as waves and currents. This allows to dispense with the present of motion compensation for the equipment handling the blade. Thus, the blade manipulator device can maintain a substantially stationary position as well, e.g. on a cantilever of the jack-up vessel, in particular relative to the wind turbine, to the benefit of the control of the position of the blade.

Preferably, the method further comprises engaging a tower of the wind turbine by a support arm of the blade manipulator device which is mounted to the mast of the blade manipulator device, e.g. at the top thereof, and extends rearwards from the mast in the X-direction of the vessel, such that the blade manipulator device leans with the support arm against the tower of the wind turbine. In this manner the tower and the blade manipulator device together form a support structure for the rotor blade, e.g. held to the rear of the lift arm. As the mast can be held stationary relative to the tower of the wind turbine, material stresses in the mast, the support structure, and the tower of the wind turbine due to any misalignment, wringing or colliding because of movement between the manipulator device and the turbine tower, is avoided. Therefore, preferably, the vessel is a jack-up vessel as described, and the lowering of the legs precedes at least the engagement of the tower by the support arm. As an alternative for a jack-up vessel, a floating vessel with a motion compensation of the mast of the blade manipulator device can be considered.

The leaning of the blade manipulator mast against the tower, enables that a force moment exerted by the blade relative to the mount of the mast with the vessel around the Y-direction is counteracted by the tower providing a counterforce in a forwards X-direction. This measure may advantageously further reduce the bending stiffness required for the mast, so as to reduce its requirements regarding its mechanical properties. Thus, a lighter construction of the mast may be possible.

The support arm may achieve this effect by only leaning against the tower, so that it in principle only needs to have, at a free, rearward end thereof, an engaging surface which is configured to engage the tower in the X-direction, e.g. like a fender. It does not need to have any parts enclosing the circumference of the tower, or gripping or clamping the tower - although these may still be provided if desired in a certain situation.

The support arm is, preferably, mounted to the mast such as to be pivotable between a retracted position in which it is substantially alongside the mast, that is, extends substantially vertically, and a rearward position in which it extends rearwards from the mast in the X-direction, and the method further comprises, after the arranging of the vessel and prior to at least the mounting of the blade, preferably before the holding of the blade, pivoting the support arm from the retracted position to the rearward position. The pivotability to the rearward position enables that the engagement of the support arm with the tower may take place after arranging the vessel, so that the engagement is advantageously the result of the pivoting, and not of the arranging of the vessel. The pivotability to the retracted position may enable the blade manipulator device to be more compact. Other designs for moving between the retracted position and the rearward position of the support arm are also possible.

The support arm is, preferably, mounted to the mast at an upper end of the mast. This may in embodiments, for example wherein the lift arm and the support arm are both connected at a front side of the mast, enable a large movement range of the lift arm in the height direction.

The method may comprise moving parts of the wind turbine in order to bring the hub into alignment with the blade held at installation height by the blade manipulator for mounting of the blade thereon. For example, the nacelle may be yawed by the yaw drive, the hub may be rotated around the horizontal rotor axis, and/or the pitch angles may be adjusted. As is common for 3 o'clock and 9 o'clock installation, the hub may be rotated so that the hub connection for the rotor blade is in the 3 o'clock or 9 o'clock position, respectively.

The first aspect furthermore relates to a method for removal of a blade from an offshore wind turbine from an installation vessel, comprising the discussed arranging of the vessel, the upwardly displacing of the free end of the lift arm through actuation of the lift arm drive(s), now without a blade, by one or both of the two ways, disconnecting the rotor blade from the hub of the wind turbine in a 3 o'clock or a 9 o'clock position, holding the rotor blade in the Y-direction on the free end of the lift arm, and lowering the horizontally held blade from the installation height by downwardly displacing the free end of the lift arm through actuation of the lift arm drive(s). The first aspect furthermore relates to a method for replacement of the blade from an offshore wind turbine from an installation vessel, wherein the lowered blade is released from the free end of the lift arm, and the discussed method for installing the rotor blade is subsequently performed.

The first aspect furthermore relates to an installation vessel which is suitable for use in the method according to the first aspect. The vessel is provided with a blade manipulator device. This blade manipulator device comprises a vertical mast which is mounted at a lower end thereof to the vessel at the stern of the vessel, and a lift arm connected to the mast. The lift arm has a free end which is provided with a coupler. The coupler is configured to support a wind turbine blade in a horizontal orientation with its longitudinal extension in the Y-direction of the vessel. For example, the coupler is configured to support a lifting tool accommodating the blade, e.g. to connect with the lifting tool. The free end of the lift arm is upwardly displaceable relative to the mast to an installation height of the wind turbine blade by means of one or more lift arm drives of the blade manipulator device. The upward displaceability may be established in two ways of which one or both may be applied in the device. Preferably, both are applied.

In the first way, the lift arm of the blade manipulator device is connected to the mast such as to be pivotable relative to the mast around a lift arm pivot axis extending in the X-direction of the vessel. The coupler supports the rotor blade pivotally around a coupler pivot axis that is parallel to the lift arm pivot axis. This is provided in order to maintain the horizontal orientation of the blade during a pivoting of the lift arm around the lift arm pivot axis. The blade manipulator device comprises a lift arm pivot drive for driving the pivoting of the lift arm.

In the second way, the lift arm is connected to the mast via a driven trolley that is vertically translatable along a vertical guide of the mast, so that driving an upwards translation of the trolley upwardly translates the lifting arm, including the free end thereof, along the vertical guide, and thus along the mast. The blade manipulator device comprises a lift arm translation drive for driving the vertical translation of the lift arm.

The first aspect furthermore relates to a blade manipulator device as described, e.g. for use in the described method and/or for use with the vessel.

The blade manipulator device comprises the vertical mast mountable at a lower end thereof to the hull of the vessel, e.g. to a cantilever on the hull of the vessel, and a lift arm that is connected to the mast the lift arm having a free end. Preferably, the free end has a coupler which is configured to support a wind turbine blade in a horizontal orientation. The free end of the lift arm is upwardly displaceable relative to the mast to an installation height of the wind turbine blade by means of one or more lift arm drives of the blade manipulator device.

The lift arm may be connected to the mast such as to be pivotable around a lift arm pivot axis extending horizontally perpendicular to the lift arm, and the free end, e.g. the coupler, is configured to support the wind turbine blade pivotally around a pivot axis parallel to the lift arm pivot axis, for maintaining the horizontal orientation of the blade during a pivoting of the lift arm. The lift arm drives of the blade manipulator device comprise at least a lift arm pivot drive for driving the pivoting of the lift arm.

The lift arm may be connected to the mast via a driven trolley that is vertically translatable along a vertical guide of the mast, so that driving an upwards translation of the trolley upwardly translates the lift arm, including the free end thereof, along the vertical guide, and thus along the mast. The lift arm drives of the blade manipulator device thereto comprise a lift arm translation drive for driving the vertical translation of the lift arm.

In an embodiment, the lift arm of the blade manipulator device has installation positions in which the free end, e.g. the coupler at the free end, and therefore the held rotor blade, is higher than a top of the mast. At the installation positions, the held blade is at the installation height thereof.

In an embodiment, the trolley and the mast are provided with a rack and pinion system. In another embodiment, the trolley is suspended from one or more winch driven cables.

The trolley may be guided by one or more rails along the mast, which are engaged by the trolley.

In an embodiment, the lift arm comprises, at a side thereof relative to the lift arm connection to the mast opposed to a side thereof having the coupler, e.g. at another free end thereof, a counterweight for counteracting a force moment exerted by the rotor blade to be held, e.g. of both the blade and the lifting tool it is held by, relative to the lift arm connection to the mast. This counterweight has the effect of displacing the center of gravity of the lift arm towards the lift arm pivot axis. Thereby, the moment arm of the force moment exerted relative to the pivot axis is reduced, and thereby, the moment itself. This may favor the load profile of the mast, in particular any bending stress in the Y-direction. Preferably, the counterweight has a weight and distance relative to the lift arm connection to the mast such, that the center of gravity of the total of the lift arm including the counterweight and the coupler, the held blade, and if present the lifting tool, is at least in the Y-direction located substantially at the lift arm connection to the mast.

In an embodiment, the mast of the blade manipulator device is pivotally mounted to the hull of the vessel, e.g. to the cantilever, such as to enable a pivoting of the mast around a mast pivot axis in the X-direction of the vessel over an angle of at most 3 degrees, and the vessel comprises a mast pivot drive for pivoting the mast around the mast pivot axis.

In an embodiment, the coupler of the blade manipulator device is a lifting tool coupler, which is connected to the free end of the lift arm. For example, the coupler is pivotally connected to the free end, so as to be pivotable around the coupler pivot axis that extends in the X-direction. The lifting tool coupler may have, e.g. at its rear side, a connector configured to connect to a lifting tool that accommodates the blade, e.g. to a mating connector of the lifting tool, so as to secure the lifting tool mechanically to the coupler.

The first aspect furthermore relates to a method for removal of a blade from an offshore wind turbine using an installation vessel, comprising the discussed arranging of the vessel, holding the rotor blade horizontally in the Y-direction by means of the blade manipulator device, disconnecting the rotor blade from the hub of the wind turbine in a 3 o'clock or a 9 o'clock position, lowering the horizontally held blade from the installation height through actuation of the lift arm drive(s).

The first aspect furthermore relates to a method for replacement of the blade from an offshore wind turbine using an installation vessel, wherein the discussed method for installing the rotor blade is performed after the method for removal of the blade.

The first aspect furthermore relates to a lifting tool for use with the blade manipulator device and/or with the vessel according to the invention, for example for use in a method according to the invention.

The lifting tool is configured to accommodate the blade, e.g. to support the horizontally orientated blade from below, e.g. clamping the blade from above, and is configured for holding the rotor blade horizontally. For example, the blade is insertable into the lifting tool and removable therefrom by passing horizontally through a front side of the lifting tool, transverse to the longitudinal direction of the rotor blade.

In an embodiment, the lifting tool comprises at the top of the lifting tool an upper attachment portion for suspending the lifting tool from a crane, e.g. from a crane hook, e.g. via one or more slings.

In an embodiment, the lifting tool comprises a connector for securing the lifting tool to the coupler of the blade manipulator device. For example, the connector is a rear connector of the lifting tool located at a rear side of the lifting tool for securing the lifting tool to the coupler of the blade manipulator device, e.g. to a front connector thereof. Thus, whereas prior art blade lifting tools can only be connected to a crane, the lifting tool according to an embodiment of the invention can also be connected to the coupler of the blade manipulator device as described herein. In embodiments, this allows for a method wherein the blade is first lifted by means of the crane engaging on the lifting tool, which load is then transferred to the blade manipulator device while the blade remains to be held by the lifting tool - by securing the lifting tool via its connector to the coupler of the blade manipulator device. Then the crane can be released from the lifting tool. Thus, there is no need to remove the blade from the lifting tool for this transfer from crane to the blade manipulator device. In an embodiment, wherein the rear connector is located at a rear side of the lifting tool and the upper attachment portion at the top side thereof, the lifting tool may be secured to the coupler horizontally while the lifting tool is still supported vertically by the crane suspension. The upper and rear attachment are furthermore less likely to interfere with each other - as they may be established in different planes.

The first aspect furthermore relates to a system of a coupler and a lifting tool as described herein, for use with a blade manipulator device and/or with a vessel according to the first aspect and/or in a method according to the first aspect. The coupler of the blade manipulator device then may be seen as a lifting tool coupler, which has, a connector configured to connect to the mating connector of the lifting tool so as to secure the lifting tool to the coupler. The coupler is configured to be secured to the free end of the lift arm.

It is noted that the embodiments and features described in relation to either aspect may be used in combination with any one or more of the other aspects to provide the advantages associated therewith. For example, a preferred method is formed by a combination of the methods described in relation to all of the various aspects. A preferred vessel is formed by combining the features of the vessels according to all of the various aspects. The same applies to the blade manipulator device, the lifting tool, and the systems thereof.

In a second aspect thereof, the invention provides a method for installing a rotor blade onto an offshore wind turbine using an installation vessel, for example a jack-up vessel. The method comprises:
- horizontally storing the rotor blade, e.g. on the vessel, in an orientation with a longitudinal direction thereof extending in an X-direction of the vessel,
- arranging the vessel with the stern of the hull of the vessel facing the wind turbine, e.g. facing the hub of the wind turbine, the stern having a distance from a tower of the turbine in the X-direction, and
- suspending the rotor blade horizontally and still oriented in the X-direction from a crane of the vessel,
- rotating the suspended rotor blade by a slewing of the crane around a vertical slew axis, e.g. by a slewing of a crane boom thereof, such that the orientation of the blade changes from the X-direction to a Y-direction of the vessel,
- lifting the rotated rotor blade upwards to an installation height thereof, and
- mounting the rotor blade to a hub of the wind turbine in a 3 o'clock position or a 9 o'clock position.

It is noted that the installation height of the rotor blade corresponds to the height of a connection of the hub for the rotor blade.

The storage of the rotor blade may be onto the deck of the installation vessel, or may be on the side of the installation vessel. For example, a storage facility, e.g. a rack, may be provided which is attached to the hull of the vessel at a starboard or port side of the vessel, configured for accommodating one or more rotor blades therein horizontally, so that these extend alongside the vessel in an X-direction. Thus, the term 'on' in the first mentioned step of the method must be interpreted broadly to include these possibilities.

The second aspect also relates to a method wherein instead of horizontally storing the rotor blades on the installation vessel, the rotor blades are stored on another vessel, e.g. a feeder vessel, and the other vessel is prior to suspending of the rotor blade maneuvered alongside the installation vessel such that the blades extend in the X-direction of the installation vessel, within reach of the crane thereof.

The second aspect also relates to a method without the step of storing, wherein the rotor blades stored in the X-direction form a starting point for the method. Thus, the second aspect provides a method for installing a rotor blade onto an offshore wind turbine using an installation vessel, comprising arranging the vessel with the stern of the vessel facing the offshore wind turbine, the stern having a distance from a tower of the turbine in the X-direction, suspending the rotor blade horizontally and oriented in the X-direction from a crane of the vessel, rotating the suspended rotor blade by a slewing of the crane around a vertical slew axis, e.g. by a slewing of a crane boom thereof, such that the orientation of the blade changes from the X-direction to a Y-direction of the vessel, lifting the rotated rotor blade upwards to an installation height thereof, and mounting the rotor blade to a hub of the wind turbine in a 3 o'clock position or a 9 o'clock position.

By the rotating of the suspended rotor blade from the X-direction to the Y-direction, the method enables that the blades are stored in the X-direction and are mounted in the Y-direction. In prior art solutions, these blades are stored in the same direction as they are mounted. The X-direction being the longitudinal side of the vessel, may enable that the hull of the vessel has smaller main dimensions. After all, the smaller Y-dimensions of the vessel now no longer have to be attuned to the length of the blades, only the larger X-dimensions. Furthermore, the method enables embodiments wherein the rotor blades are stored at one or both sides of the installation vessel as described before, as these sides do not face the wind turbine, so that the rotor blades do thereby not end up between the vessel and the wind turbine where they may interfere with the approaching of the wind turbine.

The method optionally further comprises, after the rotating of the suspended blade and prior to at least the mounting, transferring the rotated blade from the crane to a blade manipulator device that is located at the stern of the vessel, which blade manipulator device carries out the lifting of the blade to the installation height. In particular, the method according to the second aspect may be combined with the method according to the first aspect. Advantageously, in such methods, the crane is used only for transferring the blade from the storage, e.g. the rack extending along a side of the installation vessel, to the blade manipulator device. This enables to embody the crane of the installation vessel fairly small, as the lifting of the blade to the installation height is performed by the blade manipulator device. The blade manipulator device can in turn be embodied to be suitable primarily for lifting, and, preferably also aligning, the wind turbine blade, and does not need to be suitable for picking up the blade from the storage. In embodiments, it is envisaged that, after the transfer, the crane is slewed back to its initial position in order to be out of the way for the lifting of the blade.

In embodiments, in the store of the rotor blade(s), the blade is already held in a blade lifting tool, , e.g. which is configured to support the blade from below, and the suspending of the wind turbine from the crane involves connecting the crane to the lifting tool. This approach may speed up the installation procedure.

The blade manipulator device used in embodiments of the method according to the second aspect of the invention, may, as discussed with the first aspect of the invention, comprise a coupler which is provided on a lift arm of the blade manipulator device, wherein the transfer of the blade to the blade manipulator device involves connecting the blade to the coupler so that it is supported by the coupler. The blade manipulator device is, preferably, embodied as described in relation to the first aspect of the invention. In particular, the coupler is preferably configured for connecting to the lifting tool to secure the lifting tool to the lift arm.

In an embodiment, it is envisaged that, when no lifting tool is connected to the coupler, an auxiliary, e.g. small capacity, lifting system, e.g. an auxiliary crane, is connected to the coupler. This auxiliary lifting system may be used to handle auxiliary lifting a wind turbine component to be mounted to or in the nacelle, e.g. a generator, a gearbox, or another component thereof. This approach may involve lifting the auxiliary lifting system, to the height of the nacelle of the wind turbine, and installing the component thereon or therein using the auxiliary lifting system.

The second aspect furthermore relates to an installation vessel for use in the method according to the second aspect, comprising a facility for horizontally storing at least one rotor blade in an X-direction of the vessel, a crane, and a blade manipulator device. The crane is configured to be connected to a rotor blade which is in the X-direction in the storage facility, such as to horizontally suspend the blade from the crane in an orientation with a longitudinal direction of the blade extending in the X-direction, and is configured for slewing around a vertical slew axis, e.g. for slewing of a crane boom thereof, to rotate the suspended blade so that the orientation of the blade changes from the X-direction to a Y-direction of the vessel.

The blade manipulator device is mounted to the vessel at the stern of the vessel, preferably rearward of the crane, and is configured to receive the rotor blade oriented horizontally in a Y-direction of the vessel and lift the blade to a hub of an offshore wind turbine while maintaining the orientation of the blade for installation in a 3 o'clock position and/or a 9 o'clock position.

In an embodiment, the crane is configured to suspend the rotor blade therefrom by means of a blade lifting tool, e.g. a cradle, e.g. configured to support the blade from below. The blade manipulator device comprises a lifting tool coupler for securing the lifting tool to the blade manipulator device with the blade extending in the Y-direction. The lifting tool and the lifting tool coupler may be configured for coupling the lifting tool such, that the center of gravity of the rotor blade is aligned with the coupler in at least the longitudinal direction of the rotor blade, e.g. coincides with the coupler. The purpose is to reduce or eliminate a force moment exerted by the blade and the lifting tool relative to the coupler.

In an embodiment, the blade manipulator device, e.g. the lifting arm, and/or the lifting tool coupler thereof, comprises alignment means for moving the coupled lifting tool relative to the blade manipulator device. This may facilitate accurate positioning of the blade root relative to the hub connection for the blade for the purpose of mounting of the blade.

In an embodiment, the blade manipulator device comprises coupler positioning means for displacing the coupler along the blade manipulator device, for facilitating a relative positioning of the coupler and the lifting tool and therefore, a coupling thereto.

In an embodiment the blade manipulator device comprises a lift arm, which is configured to support the rotor blade, e.g. at a free end thereof, e.g. to support the rotor blade held by the lifting tool, e.g. wherein the lifting tool coupler is attached to the lift arm, e.g. to the free end thereof.

In an embodiment the lifting tool coupler is furthermore configured for coupling an auxiliary lifting system, e.g. a small crane, to the blade manipulator device, the auxiliary lifting system being configured for handling a wind turbine component that is to be mounted to or in the nacelle, e.g. a generator or a generator component.

The second aspect furthermore relates to a lifting tool for use in the method according to the second aspect and/or with the vessel according to the second aspect, e.g. wherein a blade manipulator device with a coupler is used. The lifting tool is configured for accommodating a blade in a horizontal orientation, e.g. to support the blade from below. In embodiments, the lifting tool comprises at its top side an upper attachment portion, configured for connection of the lifting tool to an object suspension device, e.g. a crane hook, of the crane, so as to suspend the lifting tool from the crane. In embodiments, the lifting tool is open at a front side thereof, such that the blade is insertable and removable therefrom by passing horizontally through the open front side in a direction perpendicular to a longitudinal direction of the blade. In embodiments, the lifting tool further comprises, e.g. at its rear side, a connector, configured for connection of the lifting tool to the coupler of the blade manipulator device.

The lifting tool may comprise alignment means for moving the rotor blade within the lifting tool, e.g. such as to align the center of gravity of the blade with the connector, and therewith, with the coupler, when connected thereto.

The second aspect furthermore relates to a system of a coupler and a lifting tool as described herein, for use with a device and/or with a vessel according to the second aspect and/or in a method according to the second aspect. The coupler of the blade manipulator device is a lifting tool coupler, which has at its front side a front connector configured to connect to the rear connector of the lifting tool so as to secure the lifting tool to the coupler at a front side of the coupler. The coupler is configured to be secured at a rear side thereof to the free end of the lift arm at a front side of the lift arm.

The second aspect furthermore relates to a system of a blade manipulator device and a lifting tool, for use in the method and/or with the vessel according to the second aspect wherein such blade manipulator device is used. The lifting tool is open at a front side thereof, such that the blade is insertable therein and removable therefrom by passing horizontally through the open front side in a direction perpendicular to a longitudinal direction of the blade. The blade manipulator device comprises a coupler, wherein the coupler and lifting tool comprise mating connectors for interconnection of the lifting tool and the coupler, wherein the connector of the lifting tool is provided at a rear side of the lifting tool. The blade manipulator device is configured to lift the coupler, connected to the lifting tool holding the blade, to a hub of an offshore wind turbine while maintaining the orientation of the blade for installation in a 3 o'clock position and/or a 9 o'clock position.

In a third aspect thereof, the invention relates to a method for installing a rotor blade onto an offshore wind turbine using an installation vessel, comprising:
- arranging the vessel with a stern of the vessel facing the wind turbine, e.g. facing the hub of the wind turbine, and having a distance to a tower of the wind turbine in the X-direction, the hull of the vessel e.g. being aligned with the tower of an offshore wind turbine, and
- horizontally holding a rotor blade in a Y-direction of the vessel on a free end of a lift arm of a blade manipulator device, the lift arm being connected to a vertical mast of the blade manipulator device, the mast being mounted at the stern of the vessel, the blade being held, seen in an X-direction of the vessel, rearward of the lift arm, e.g. between the vessel and a tower of the wind turbine,

- lifting the blade whilst being held horizontally and extending in the Y-direction of the vessel towards a hub of the wind turbine, by upwardly displacing the free end of the lift arm, and thus the held blade, relative to the mast to an installation height of the rotor blade, through actuation of one or more lift arm drives of the blade manipulator device, and
- mounting the lifted rotor blade to a hub of the wind turbine, e.g. in a 3 o'clock position or a 9 o'clock position,
Herein, the blade is held at the free end of the lift arm and to the rear of the lift arm, e.g. with a root of the blade being aligned with a blade connection of the hub, seen in an X-direction of the vessel.

Possible advantages of this method, already discussed in relation to the first and/or the second aspect, are for example an easier maneuvering of the vessel, and the possible utilization of the starboard and/or port side of the vessel, e.g. for storage of objects without reducing the distance between the vessel including these objects and the tower.

Preferably, the blade is held at the rear side of the free end, that is, the side of the free end that faces the wind turbine. The securing of the blade on the free end may enhance the control of the rotor blade, reduce the influence of the wind on the position and orientation of the rotor blade, may reduce or eliminate the need for compensating movements. Furthermore, the height of the blade manipulator device may in embodiments be reduced, and material requirements may be less stringent.

Notably, with this method, the lift arm moves in a plane that is offset from the motion plane pf the blade to lift the blade, rather than, for example, extending above the blade to support it from above. This may enable the vessel to come closer to the turbine for the installation, as the lift arm may horizontally be further away from the hub during installation.

The third aspect furthermore relates to a method for removal of a blade from an offshore wind turbine using an installation vessel, comprising the discussed arranging of the vessel, the upwardly displacing of the free end of the lift arm through actuation of the lift arm drive(s), now without a blade, by one or both of the two ways, disconnecting the rotor blade from the hub of the wind turbine in a 3 o'clock or a 9 o'clock position, holding the rotor blade in the Y-direction on the free end of the lift arm, and lowering the horizontally held blade from the installation height by downwardly displacing of the free end of the lift arm through actuation of the lift arm drive(s). The first aspect furthermore relates to a method for replacement of the blade from an offshore wind turbine using an installation vessel, wherein the lowered blade is released from the free end of the lift arm, and the discussed method for installing the rotor blade is subsequently performed.

The third aspect furthermore relates to an installation vessel for use in the method, provided with a blade manipulator device comprising a vertical mast which is mounted at a lower end thereof to the hull of the vessel at the stern of the vessel, and a lift arm connected to the mast. The lift arm has a free end, preferably provided with a coupler, which is configured to support a rotor blade in a horizontal orientation with its longitudinal extension in the Y-direction of the vessel, wherein the free end of the lift arm is upwardly displaceable relative to the mast to an installation height of the rotor blade by means of one or more lift arm drives of the blade manipulator device. The blade manipulator device is arranged and configured to hold the blade at the free end of the lift arm at the rear of the lift arm, e.g. in a plane aligned with the hub, seen in the X-direction of the vessel. Preferably the lift arm is mounted at the rear of the mast.

Preferably, the mast of the blade manipulator device is mounted to the hull as close as possible to the rearmost edge, for example on a cantilever, of the vessel, thus as close to the wind turbine as possible after the arranging of the vessel.

In an embodiment, the lift arm extends at least in the Y-direction, e.g. only in the Y-direction, e.g. moves the blade in a Y-directed vertical plane. In an embodiment, the lift arm extends in a vertical plane in the Y-direction of the vessel. Preferably, at least when the blade is at the installation height, the blade is held in the Y-direction aligned with the hub of the turbine. The lift arm moving in a plane offset from the motion plane of the blade, then enables to engage the tower of the turbine by means of a support arm that extends from the mast in the X-direction, as is discussed in relation to the first aspect.

The third aspect of the invention furthermore relates to a blade manipulator device for use in the method and/or with the vessel according to the third aspect. The blade manipulator device comprises a vertical mast mountable at a lower end to a vessel, and a lift arm connected to the mast, the lift arm having a free end, preferably provided with a coupler, which is configured support a rotor blade in an orientation with its longitudinal extension parallel to the lift arm, wherein the free end of the lift arm is upwardly displaceable relative to the mast to an installation height of the rotor blade by means of one or more lift arm movement drives of the blade manipulator device. The coupler is arranged and configured to hold the blade at the free end of the lift arm to the rear the lift arm.

In a fourth aspect thereof, the invention relates to a method for installing a rotor blade onto an offshore wind turbine using an installation vessel, comprising
- arranging the vessel with a stern of the vessel facing the wind turbine, e.g. facing the hub of the wind turbine, and having a distance to the tower in an X-direction of the vessel, e.g. a hull of the vessel being aligned with the tower in the X-direction,
- horizontally holding a rotor blade in a Y-direction of the vessel at a free end of a lift arm of a blade manipulator device, the lift arm being connected to a vertical mast of the blade manipulator device at the stern of the vessel,
- lifting the blade horizontally held and extending in the Y-direction of the vessel towards a hub of the wind turbine, by upwardly displacing the free end of the lift arm, and thus the held blade, relative to the mast to an installation height of the rotor blade, through actuation of one or more lift arm drives of the blade manipulator device, and
- mounting the lifted rotor blade to a hub of the wind turbine in a 3 o'clock position or a 9 o'clock position.

The mast of the blade manipulator device is mounted with a lower end thereof on a cantilever supported on a hull of the vessel at the stern of the vessel. This cantilever is movable relative to the hull of the vessel at least in the X-direction of the vessel. The method further comprises moving the cantilever, and therewith the blade manipulator device, rearward along the X-direction towards the tower of the wind turbine.

Thus, the movement of the cantilever is used to move the blade manipulator device towards the wind turbine. This facilitates arranging the vessel i9n proximity of the tower, e.g. a jack-up vessel After all, to achieve the operational distance of the blade manipulator device to the turbine tower, the vessel can now be arranged some distance in the X-direction further from the turbine tower, as the cantilever can be moved rearward to bridge or reduce this further distance.

Preferably, the moving of the cantilever is done at least after arranging of the vessel in proximity of the tower, and preferably prior to the horizontally holding of the rotor blade. Preferably, the moving of the cantilever is done before the lifting of the blade by means of the manipulator device. In embodiments, this motion, or part thereof, is performed at another stage, e.g. during the mounting of the blade, in order to align the blade with the hub in the Y-direction.

Preferably, as discussed already, the vessel is a jack-up vessel, and the arranging of the vessel - prior to the moving of the cantilever - comprises the lowering of the jack-up legs and the raising of the hull.

Instead of a jack-up vessel, a vessel wherein the mast is mounted on the floating hull via motion compensation can be used, e.g. motion compensation device being provided between the cantilever and the mast.

In embodiments, e.g. when the vessel is a jack-up vessel, the method may further comprise engaging a tower of the wind turbine by a support arm of the blade manipulator device which extends rearward from the mast of the blade manipulator device, such that the blade manipulator device leans with the support arm against the tower of the wind turbine. In this manner the blade manipulator device and the tower together form a support structure for the rotor blade held by the lift arm. In an embodiment, the engaging may be carried out by the moving of the cantilever, and therewith the support arm, rearward, wherein this motion of the cantilever is stopped upon the engaging the wind turbine mast. In another embodiment the support arm may, after the rearward moving of the cantilever, be moved, e.g. be pivoted, relative to the mast from a retracted position, e.g. in which it extends along the mast, to an extended position in which it extends rearwards in the X-direction, so as to engage the tower of the wind turbine.

The method may further comprise moving the cantilever, and therewith the blade manipulator device, along the Y-direction, for example in order to align the blade root with the blade connection of the wind turbine hub in the X-direction.

The method may further comprise pivoting the mast of the blade manipulator device relative to the vessel around a mast pivot axis in the X-direction of the vessel at the mount of the mast at the lower end thereof, e.g. over at most 3 degrees, for example to align the blade root with the blade connection of the hub in the X-direction and/or to compensate for any inaccuracies in the jacking of the vessel, e.g. a non-verticality of one or more of the jack-up legs.

In an embodiment, the method comprises, after the mounting of the blade to the hub, releasing the rotor blade from the lift arm by moving the cantilever, and therewith the blade manipulator device including the lift arm, forward along the X-direction and horizontally away from the hub of the wind turbine. It is envisaged that therein, the horizontally holding of the rotor blade is done by supporting it inside a blade lifting tool coupled to the free end of the lifting arm, which lifting tool is open at a front side thereof, such that the blade is removable therefrom by passing horizontally in the X-direction through the open front side, so that the moving of the cantilever rearward moves the blade out of the lifting tool. Thus, advantageously, the blade may be disconnected from the lifting tool merely by moving the cantilever without specific additional actions therefor.

The fourth aspect furthermore relates to an installation vessel as described here, for example for use in the method according to the fourth aspect. The hull of the installation vessel is provided with a blade manipulator device comprising a vertical mast which is mounted at a lower end thereof to the vessel at the stern of the vessel, and comprising a lift arm connected to the mast. The lift arm has a free end, preferably having a coupler, which is configured to support a rotor blade in a horizontal orientation with its longitudinal extension in the Y-direction of the vessel. The free end of the lift arm is upwardly displaceable relative to the mast to an installation height of the rotor blade by means of one or more lift arm drives of the blade manipulator device. The mast of the blade manipulator device is mounted on a cantilever of the vessel at the stern of the vessel. The cantilever is movable relative to a deck of the vessel at least in the X-direction of the vessel to extend the hull of the vessel in the X-direction.

The fact that the cantilever is movable at the stern in the X-direction, advantageously enables to arrange the vessel with its stern, thus a shorter, Y-directed side of the vessel, facing the wind turbine for mounting the blade by the blade manipulator device. Preferably, the mast is mounted to the cantilever at a rearmost end of the cantilever, most preferably near or at the rearmost edge thereof, so that the distance from the mast to the turbine tower is minimal after the arranging of the vessel and setting of the cantilever.

Preferably, the vessel is a jack-up vessel comprising jack-up legs. Herein the blade installation or removal is done with the hull in raised condition. Alternatively, the vessel is to be used in floating condition, wherein a motion compensation device is provided for the blade manipulator device. For example, such a device is arranged between the mast and the hull.

For example, the blade manipulator device may further comprise a support arm which extends rearwards from the mast of the blade manipulator device in the X-direction of the vessel. The support arm is configured to engage a tower of the wind turbine, such that the blade manipulator device leans against the tower of the wind turbine. The support arm is, for example, mounted to the mast such as to be pivotable between a retracted position in which it is alongside the mast, and a rearward position in which it extends rearwards from the mast in the X-direction.

Preferably, the support arm is mounted to the mast at an upper end or top of the mast.

In an embodiment, the cantilever, and therewith the blade manipulator device mounted thereon, is furthermore movable relative to the vessel along the Y-direction, e.g. for alignment of the blade manipulator device with the wind turbine hub.

The fourth aspect furthermore relates to a lifting tool configured for holding therein a rotor blade in a horizontal orientation, which lifting tool is configured to support the blade from below and is open at a front, side thereof, such that the blade is removable therefrom by passing horizontally through the open front side transverse to the longitudinal direction of the rotor blade. The lifting tool advantageously enables to after mounting of the blade, release the blade from the lifting tool by merely moving the lifting tool transverse to the longitudinal direction of the blade away from the blade. In a method for removal of the blade, the lifting tool advantageously enables to insert the blade in the lifting tool by merely moving the lifting tool transverse to the longitudinal direction of the blade towards the blade. The fourth aspect furthermore relates to a combination of the vessel and the lifting tool according to the fourth aspect.

The fourth aspect of the invention furthermore relates to a method for removal of a blade from an offshore wind turbine using an installation vessel, comprising arranging a vessel as discussed herein, holding the rotor blade on the free end of the lift arm whilst being in a 3 o'clock or a 9 o'clock position and extending in the Y-direction, disconnecting the rotor blade from the hub of the wind turbine, and lowering the horizontally held blade from the installation height by downwardly displacing the free end of the lift arm through actuation of the lift arm drive(s). The method for removal may further comprise, prior to the disconnection of the blade, moving the cantilever, and therewith the blade manipulator device, rearwards along the X-direction and horizontally towards the hub of the wind turbine. For example, the rearwards movement is done to cause the insertion of the blade into a lifting tool according to the fourth aspect which is supported on the free end of the lift arm. The method may further comprise moving the cantilever forwards again.

The fourth aspect furthermore relates to a method for replacement of the blade from an offshore wind turbine using an installation vessel as described herein, wherein the lowered blade is released from the free end of the lift arm, and wherein the method for installing the rotor blade is subsequently performed, e.g. without the moving of the cantilever rearwards in the meantime.

In a fifth aspect thereof, the invention provides a method for installing a rotor blade onto an offshore wind turbine using an installation vessel, e.g. a jack-up vessel. The method comprises:
- horizontally storing the rotor blade on the vessel,
- sailing the vessel towards the offshore location of the wind turbine,
- arranging the vessel with a stern of the vessel facing the wind turbine, e.g. facing the hub of the wind turbine, and having a distance to a tower of the wind turbine in an X-direction of the vessel, e.g. a hull of the vessel being aligned with a tower of an offshore wind turbine, and
- engaging and lifting the rotor blade upwards to an installation height thereof, and
- mounting the rotor blade to a hub of the wind turbine, e.g. in a 3 o'clock position or a 9 o'clock position.

The vessel is provided with a blade manipulator device comprising a vertical mast which is mounted at a lower end thereof to the hull of the vessel at the stern of the vessel, and a lift arm connected to the mast, configured to with a free end thereof support a rotor blade, and of which the free end is upwardly displaceable relative to the mast to an installation height of the rotor blade by means of one or more lift arm drives of the blade manipulator device, for the lifting the rotor blade.

The method further comprises, after the sailing and preferably after the arranging, extending the mast from a collapsed position thereof, in which an upper section of the mast extends along a lower section of the mast, to an extended position thereof, in which the upper section of the mast is above and in line with the lower section thereof. For example this may be done by pivoting the upper section, extending in the collapsed position upside down and substantially alongside the lower section of the mast, upwards relative to the lower section about a horizontal pivot axis between the upper and lower section in a center portion of the mast. Another possibility is to slide the upper section, extending in the collapsed position upright along the lower section, upwards along the lower section, e.g. in a telescoping manner or parallel.

The fifth aspect advantageously provides a compact position for the mast during sailing of the vessel, which may benefit the balance, control, and stability of the vessel during sailing. The vessel may be less susceptible to wind, and the mast may be less susceptible to fatigue and damage due to the vessel movements during sailing.

The method may further comprise, prior to the sailing of the vessel towards the offshore location, and/or after the mounting of the blade, collapsing the mast from the extended position thereof, into the collapsed position thereof. This may e.g. be done by pivoting the upper section downwards relative to the lower section about a horizontal pivot axis between the upper and lower section in a center portion of the mast, so that the upper section extends upside down and substantially along the lower section of the mast. Another possibility is to slide the upper section downwards along the lower section, e.g. in a telescoping manner or parallel.

In an embodiment, in the collapsed position, the lift arm extends vertically substantially within the range of the lower section of the mast. The method may comprise downwardly displacing at least a part of the lift arm to fit it within this range.

The fifth aspect furthermore relates to a method for removing a rotor blade from an offshore wind turbine. This method comprises the sailing and the arranging of the vessel, and the upward displacing of the free end of the lift arm by means of the lift arm drive(s), disconnecting the rotor blade from the hub, and the lowering of the rotor blade by means of the lift arm drive(s). The rotor blade may be horizontally stored on the vessel. Prior to the sailing, the method comprises the collapsing of the mast, and after the sailing, comprises the unfolding of the mast.

The fifth aspect furthermore relates to an installation vessel for use in the method according to the fifth aspect, provided with a blade manipulator device comprising a vertical mast which is mounted at a lower end thereof to the hull of the vessel at the stern of the vessel, and comprising a lift arm connected to the mast. The lift arm is configured to support a rotor blade in a horizontal orientation with its longitudinal extension in the Y-direction of the vessel. The lift arm is upwardly displaceable relative to the mast to an installation height of the rotor blade by means of one or more lift arm drives of the blade manipulator device. The mast is collapsible from an extended position thereof, in which an upper section of the mast is above and in line with a lower section thereof, into a folded position wherein an upper section of the mast is pivoted downwards relative to a lower section of the mast about a horizontal pivot axis in a center portion of the mast, to extend upside down and substantially along the lower section of the mast. The blade manipulator further comprises one or more pivot actuators, e.g. one or more cylinders, operative between the upper and lower section for pivoting the mast downwards. The mast is unfoldable from the folded position to the extended position, the pivot actuators being furthermore operative for pivoting of the upper section upwards into the extended position of the mast.

In an embodiment the lift arm is movable into a lower position wherein the lift arm extends vertically within the range of the lower section of the mast.

A sixth aspect relates to a blade manipulator device to be mounted on the hull of an installation vessel, e.g. a jack-up vessel, wherein the blade manipulator device comprises:
- cantilever to be mounted on the hull of an installation vessel, e.g. on a deck thereof, e.g. at the stern of the hull of the vessel,
- a vertical mast mounted on the cantilever,
- a lift arm pivotally connected to a trolley about a lift arm pivot axis, which trolley is vertically translatable along the mast,

wherein the lift arm has a free end remote from the trolley that is provided with a coupler, which coupler is configured to support a rotor blade, e.g. via a lifting tool accommodating the blade,
wherein the free end of the lift arm, and thus the blade, is upwardly displaceable relative to the mast to an installation height of the rotor blade by means of one or more lift arm drives of the blade manipulator device that are configured to perform translation of the trolley and pivoting of the lift arm,
wherein the coupler is configured to support the rotor blade, e.g. via the lifting tool, pivotally around a coupler pivot axis, for maintaining the horizontal orientation of the blade during a pivoting of the lift arm around the lift arm pivot axis.

The sixth aspect of the invention also comprises an installation vessel provided with such a blade manipulator device, and a method for installation or removal of a blade from an offshore wind turbine wherein use is made of the manipulator device.

It will be appreciated that the blade manipulator device and vessel of the sixth aspect of the invention, may have additional features discussed herein with reference to one or more of the other aspects of the invention.

The invention, and the various aspects thereof, will hereinafter be described with reference to the appended drawings. The drawings schematically illustrate an embodiment of an installation vessel which illustrates all aspects of the invention and may be used in any of the methods according to any of the mentioned aspects. The vessel is shown during several stages of a method which is according to all aspects of the invention.

Such an installation vessel and such a method according to any one or more of the mentioned aspects are envisaged for providing a particularly efficient, well-controlled, and safe installation and/or removal of a rotor blade onto and/or from an offshore wind turbine. The drawings also illustrate a blade manipulator device, a lifting tool, and a system of a lifting tool and coupler which are according to all associated aspects.

In the drawings:
- figure 1: is a side view of the vessel in the Y-direction onto the starboard side,
- figure 2: is a top view of the installation vessel,
- figure 3: is a view of the installation vessel in the X-direction onto the bow,
- figures 4-5: show the vessel in the same view as figure 1, now being arranged with its stern facing an offshore wind turbine and with a hull thereof aligned in the X-direction with the turbine,
- figure 6: shows in the same view a magnified detail of the blade manipulator device on the vessel,
- figure 7: shows the vessel in the same view as figure 1, still facing the wind turbine,
- figures 8-9: are top views of the vessel with its stern still facing the offshore wind turbine and installing a rotor blade thereon,
- figures 10-11: are side views onto a left side of a system of a lifting tool and a coupler according to the invention,
- figure 12: is a top view of a blade manipulator device according to the invention,
- figure 13: shows the vessel in the same view as figure 3, the stern still facing the offshore wind turbine and installing a rotor blade thereon,
- figure 14: shows in the same view a magnified detail of the blade manipulator device on the vessel,
- figure 15: shows in the same view the vessel with its stern still facing the offshore wind turbine and installing a rotor blade thereon,
- figure 16: shows in the same view the vessel with the positions of the blade manipulator device shown in figures 13 and 15 combined in the same figure,
- figure 17: shows in the view of figure 7 the vessel, with the stern still facing the offshore wind turbine, with the positions of the blade manipulator device shown in figures 13 and 15 combined in the same figure,
- figure 18: shows the blade manipulator device in the view of figure 3, now isolated from the vessel, with the positions of the blade manipulator device shown in figures 13 and 15 combined in the same figure,
- figure 19: shows the blade manipulator device in the view of figure 7, now isolated from the vessel, with the positions of the blade manipulator device shown in figures 13 and 15 combined in the same figure,
- figure 20: shows the vessel along with the wind turbine, in the view of figure 3,
- figure 21: shows the vessel along with the wind turbine, in a top view.

In a first method step, the installation vessel is sailed over the sea to the offshore location of a horizontal axis offshore wind turbine 100 onto which a blade 104 is to be installed. The turbine 100 is of the fixed type, so mounted on the seabed via a foundation, e.g. a monopile or a jacket.

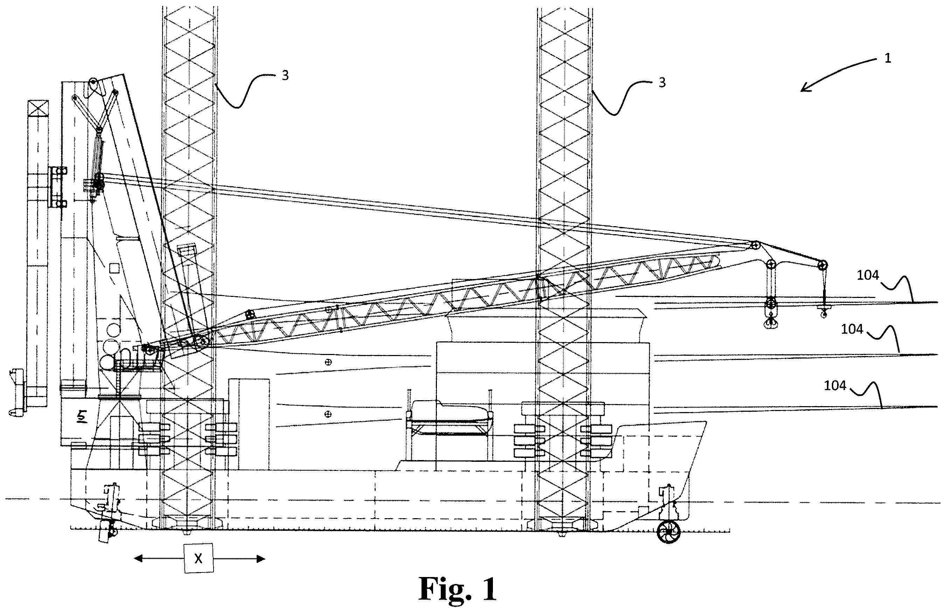

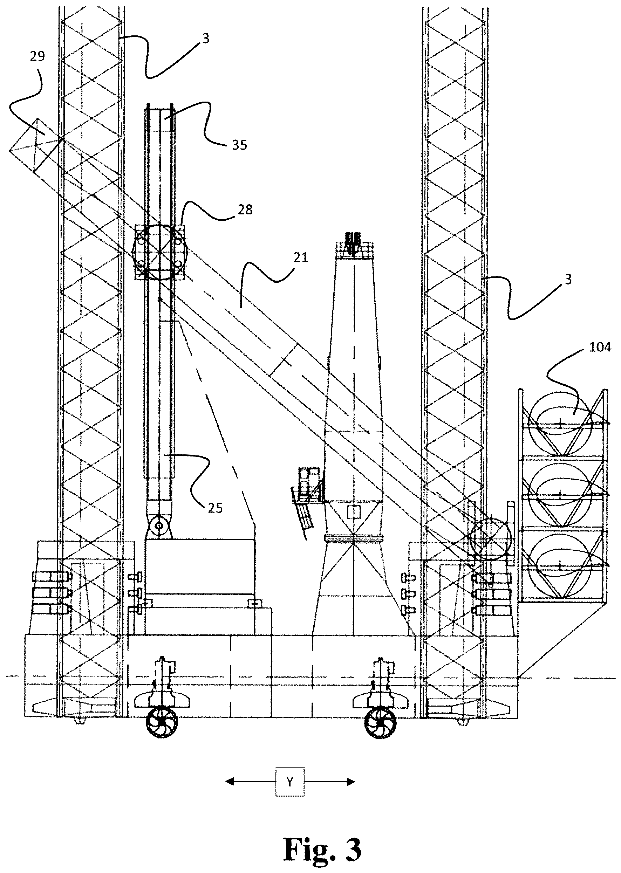

In figures 1-3, the installation vessel 1 is shown while sailing to this offshore location.

The vessel 1 is a jack-up vessel with jack-up legs 3. In figures 1-3, these jack-up legs 3 are in an upper position, so that the hull of the vessel 1 is floating.

To the port side of the hull of the vessel 1, a rack 4 is mounted in which one or more rotor blades 104 to be installed are stored horizontally in an orientation with a longitudinal direction thereof extending in an X-direction of the vessel 1.

In a second method step, the installation vessel 1 is arranged with a stern 2 of the vessel 1 facing the wind turbine 100, the stern 2 having a distance dx from a tower 101 of the wind turbine 100.

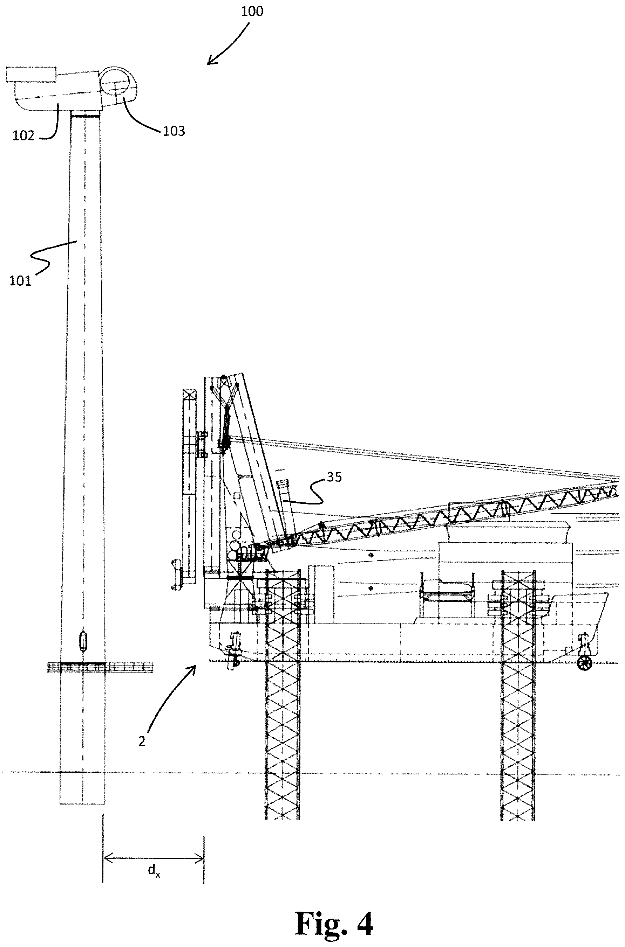

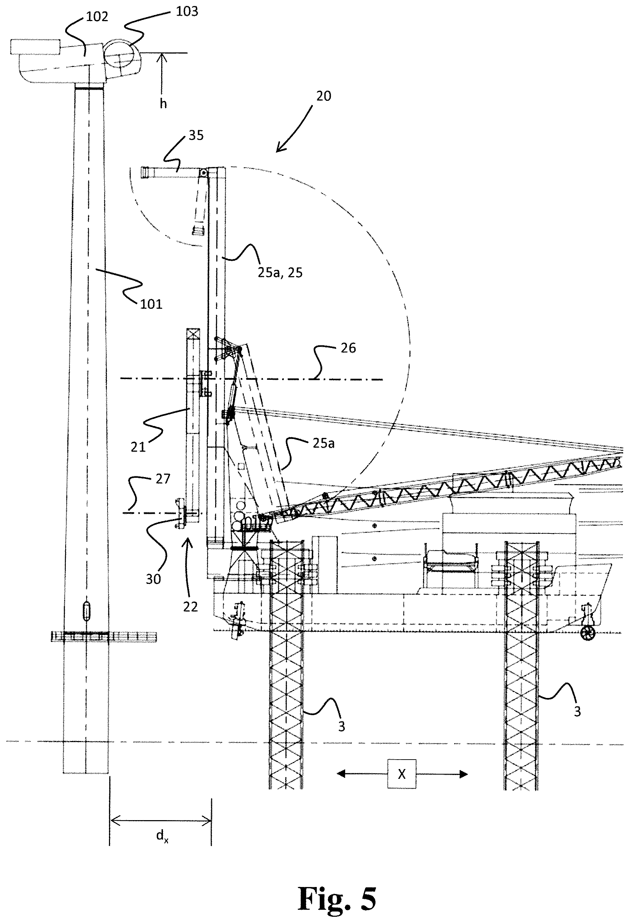

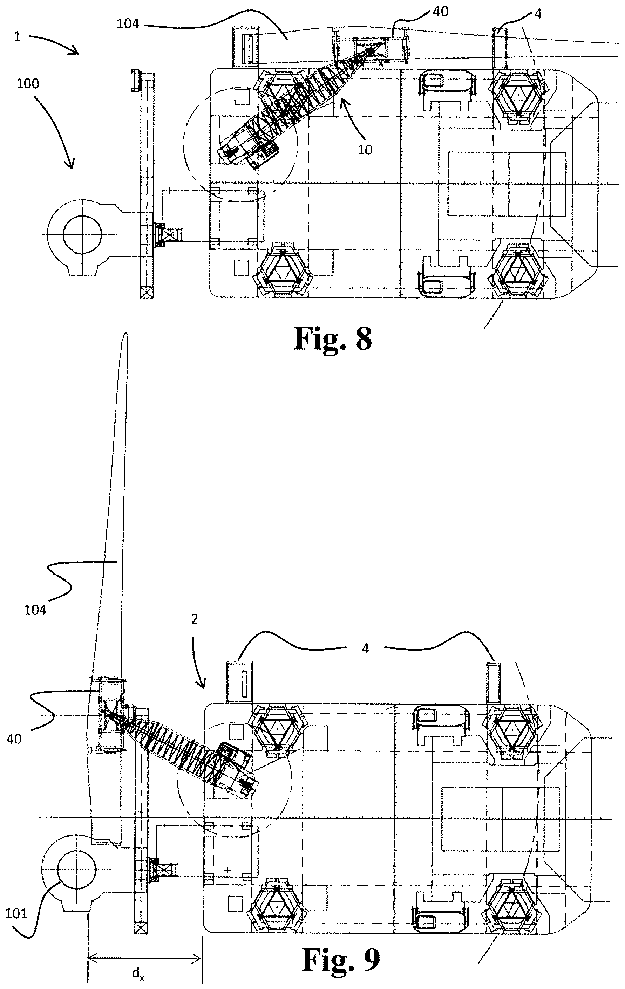

In figures 4, 5, 7, 8-9, 13, 15-17, 20 and 21 the vessel 1 is shown after such arranging of the vessel. In figures 4 and 5 and in the top views of figures 8 and 9, it is indicated that the stern 2 has a distance dx from a tower 101 of the wind turbine 100 in an X-direction of the vessel. The hull of the vessel 1 is aligned with a tower 101 of the offshore wind turbine 100 in the X-direction.

In a third method step, the jack-up legs 3 of the vessel 1 have been lowered and the hull raised as is known in the art.

As indicated in figure 5, the vessel 1 is provided with a blade manipulator device 20 comprising a vertical mast 25 which is mounted at a lower end thereof on a cantilever 5 at the stern 2 of the vessel 1. This cantilever 5 is movable relative to the hull, here over a deck 6, of the vessel 1 at least in the X-direction of the vessel 1.

A lift arm 21 is connected to the mast 25, configured to - with a free end 22 thereof - support the rotor blade 104. The free end 22 is upwardly displaceable relative to the mast 25 to an installation height h of the rotor blade 104 by means of one or more lift arm drives of the blade manipulator device 20, for the lifting the rotor blade 104 to a connection of the hub 103 of the wind turbine for the blade 104.

As is preferred, the vessel 1 has been arranged with the mast 25 of the blade manipulator device 20 aligned with the tower 101 of the wind turbine in the X-direction.

A fourth method step is depicted in figure 5 - namely extending the mast 25 from a collapsed position thereof, wherein an upper section 25a of the mast extends along a lower section 25b of the mast 25, to an extended position thereof, in which the upper section 25a of the mast 25 is above and in line with its lower section 26b.

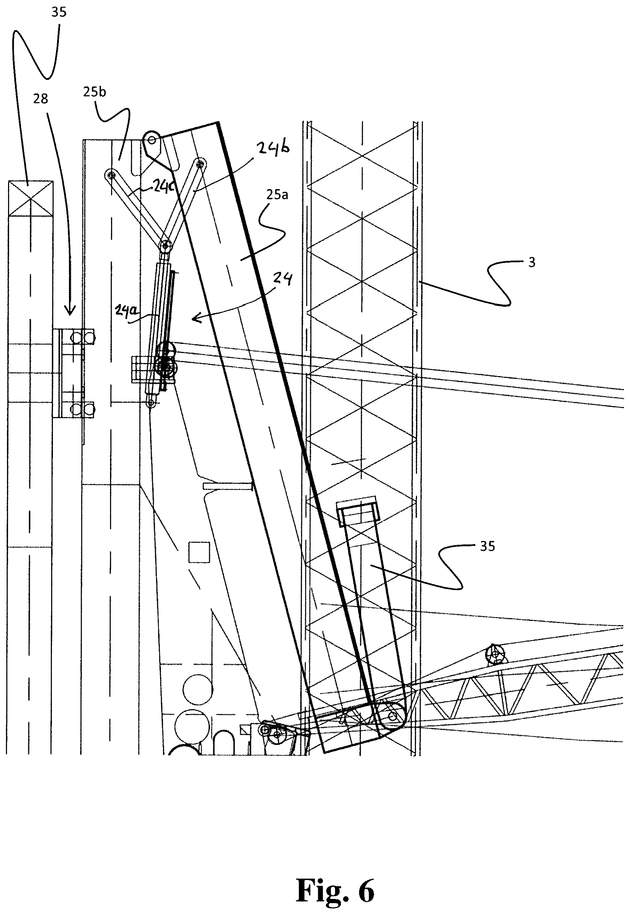

In figure 5 the upper section 25a is shown with dashed lines in the collapsed position of the mast 25, and with solid lines in the extended position of the mast 25. In this embodiment of the vessel, the extension of the mast 25 is done by pivoting the upper section 25a, extending in the collapsed position upside down and substantially alongside the lower section 25b of the mast 25, upwards relative to the lower section 25b about a horizontal, Y-directed pivot axis between the upper and lower section in a center portion of the mast 25. The collapsed position is shown magnified in figure 6.

As also shown in figure 6 in detail, the blade manipulator 20 comprises a pivot actuator 24 for folding and unfolding of the mast 25. Here the pivot actuator 24 comprises, e.g. on each lateral side of the mast 25, a cylinder 24a and two linkage bars 24b, 24c. The bars 24b, c are each with a first end thereof pivotally connected to a respective section 25a, 25b of the mast 25 and with a second end pivotally to the piston end of cylinder 24a. The pivot actuator cylinder 24a is with its chamber side end pivotally connected to the lower section 25b of the mast 25, so that the actuator is operative between the upper and lower section 25a, 25b for pivoting the mast 25 downwards and upwards. In other embodiments, the pivoting may be carried out by means of a crane 10 instead of the pivot actuator 24.

Also shown, e.g. in figure 5, is that a support arm 35 is mounted to the mast 25, here such as to be pivotable around a Y-directed support arm pivot axis between a retracted position in which it is aligned, that is, extends alongside, the mast 25, and a rearward position in which it extends rearwards from the mast 25 in the X-direction. The retracted position is shown with dashed lines and the rearward position in solid lines. In the shown method, the fifth step is pivoting the support arm 35 from the retracted position to the rearward position. The support arm 35 is mounted to the upper end of the mast 25, so that it cannot interfere with the movement of the lift arm 21 and the blade held thereby. Thus, it is mounted to the upper section 25a of the mast 25.

Figure 6 shows the retracted position of the support arm 35 in the collapsed position of the mast 25. The lift arm 21 is in a lower position in which it extends vertically substantially within the range of the lower section of the mast 25. In this state, the blade manipulator device 20 is particularly compact - e.g. so as to facilitate the step of sailing the vessel.

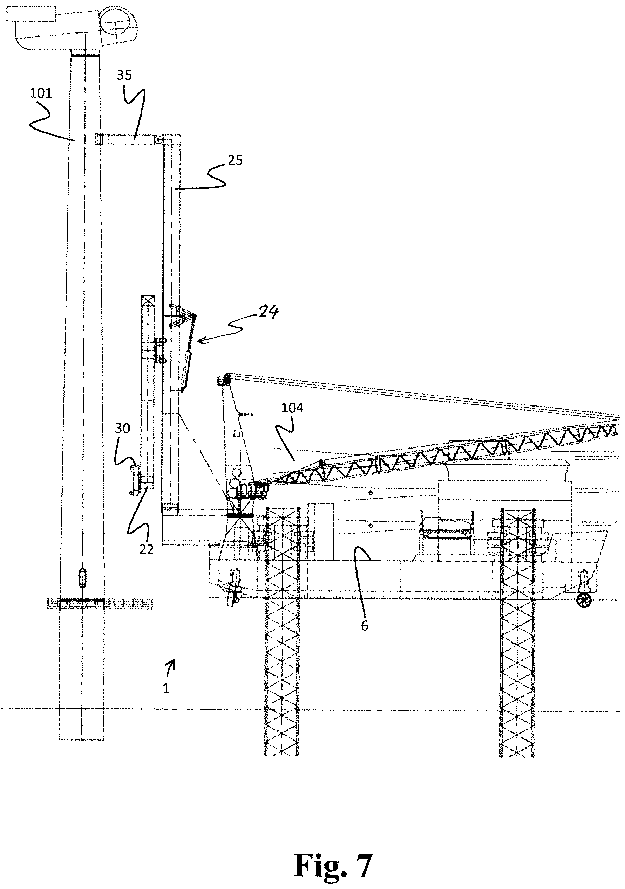

Figure 7 depicts the vessel directly after a sixth method step. As notable from the advancement from figure 5 to 6, the mast 25 of the blade manipulator device is mounted with its lower end thereof on the cantilever 5 of the hull of the vessel 1 at the stern 2 of the vessel 1. This cantilever 5 is movable relative to a deck 6 of the vessel 1 at least in the X-direction of the vessel 1. The sixth step of the method is moving the cantilever 5, and therewith the blade manipulator device 20, rearward along the X-direction and horizontally towards the tower 101 of the wind turbine 100.

It is shown that the mast 25 is mounted to the cantilever 5 at a rearmost end of the cantilever 5, at the rearmost edge thereof, so that the distance to the turbine 100 is minimal.

The cantilever 5 accommodates, as preferred, a hydraulic power unit, e.g. for operating hydraulic actuators and/or winches, as well as switchboards.

As a consequence of the rearwards movement of the cantilever 5, and therewith the blade manipulator device 20 including the support arm 35 in the rearward position thereof, the tower 101 of the wind turbine 100 is now engaged by the support arm 35 of the blade manipulator device 20. The result is that the blade manipulator device 20 now leans with the support arm 35 against the tower 101 of the wind turbine 100, and the tower 101 and the blade manipulator device 20 together form a support structure for the rotor blade 104 to be held on the free end 22.

In figure 8, a seventh method step of suspending the rotor blade 104 to be installed horizontally and still oriented in the X-direction from a crane 10 of the vessel 1. The crane 10 is mounted to the hull, e.g. the deck 6, e.g. via a pedestal thereof and has crane boom that is slewable around a vertical slew axis.

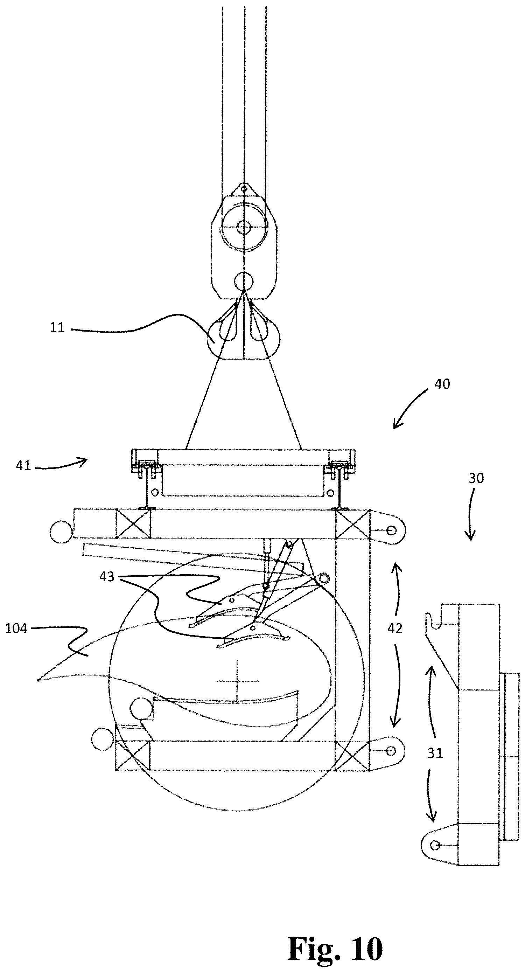

The rotor blade 104 has advantageously been stored in the rack 4 with a lifting tool 40 already holding the blade. Thus the suspension is here easily established by connecting the lifting tool 40 to an object suspension device 11 of the crane 10, which is a crane hook. Thus, here, no placement of the rotor blade in the lifting tool 40 is involved in this method step. The suspension of the blade 104 by means of the interconnected crane hook 11 and the lifting tool 40 is shown in detail in figure 10.

The advancement from figure 8 to figure 9 depict an eighth method step, which is rotating the suspended rotor blade 104 by a counterclockwise slewing of the crane 10 around a vertical slew axis. This is done by slewing of the crane boom thereof relative to a foot of the crane 10 that is fixed relative to the deck 6 of the vessel 1, such that the orientation of the blade 104 changes from the X-direction to the Y-direction of the vessel 1.

The ninth method step is to transfer the rotor blade 104 from the crane 10 to the blade manipulator device 20. Thereto, a coupler 30, which is secured on the free end 22 of the lift arm, is connected to the lifting tool holding the blade 104 for supporting the blade 104 on the free end 22. This is done by connecting the lifting tool 40 accommodating the blade 104 to the coupler 30. The coupler 30 is configured to support the rotor blade 104, because it is configured to support the lifting tool 40 accommodating the blade 104, in a horizontal orientation with its longitudinal extension in the Y-direction of the vessel 1. Thereafter the lifting tool 40 is released from the crane hook 11.

The ninth method step is illustrated by the advancement from figure 10 to figure 11. The lifting tool 40 is specifically designed to facilitate the transfer step. It comprises at the top of the lifting tool an attachment portion 41 for suspending the lifting tool 40 from the crane hook 11, and at a rear side a rear connector 42 for securing the lifting tool 40 to the coupler 30 of the blade manipulator device 20, namely to a front connector 31 of the coupler 30. The coupler is also indicated in figures 7, 12 and 18, where it is shown secured to the free end 22 of the lift arm 21. The coupler 30 of the blade manipulator device 20 is a lifting tool coupler, which has at its front side a front connector 31 configured to connect to the rear connector 42 of the lifting tool 42 so as to secure the lifting tool 40 to the coupler 30 at a front side of the coupler 30. The coupler is configured to be secured at a rear side thereof to the free end 22 of the lift arm 21 at a front side of the lift arm 21. Alternatively it may be integral with the free end 22. The connection is now done by interconnecting the front connector 31 of the coupler 30 and the rear connector 42 of the lifting tool 40.

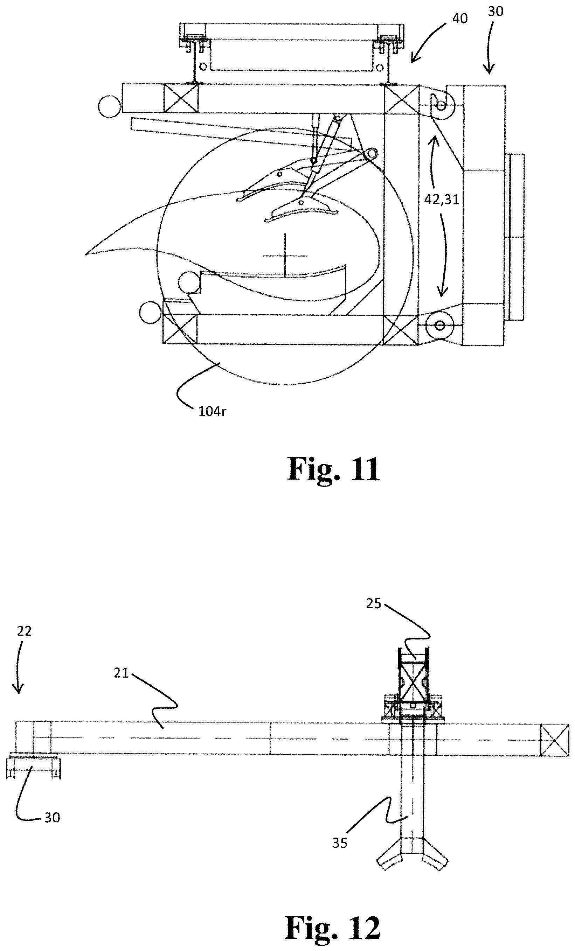

As visible in figures 10 and 11, the lifting tool 40 is configured for holding the rotor blade 104 horizontally and for supporting it from below. The lifting tool 40 comprises engagement members 43 for engaging the supported blade 104, e.g. clamping from above, to prevent undue motion relative to the lifting tool 40, for example due to wind gusts and/or to carry out small displacements of the blade 104 e.g. for later alignment with the hub connection 105 at the installation height. The lifting tool 40 is open at the front side thereof, such that the blade 104 is removable therefrom by passing horizontally through a front side of the lifting tool 40, transverse to the longitudinal direction of the rotor blade 104.

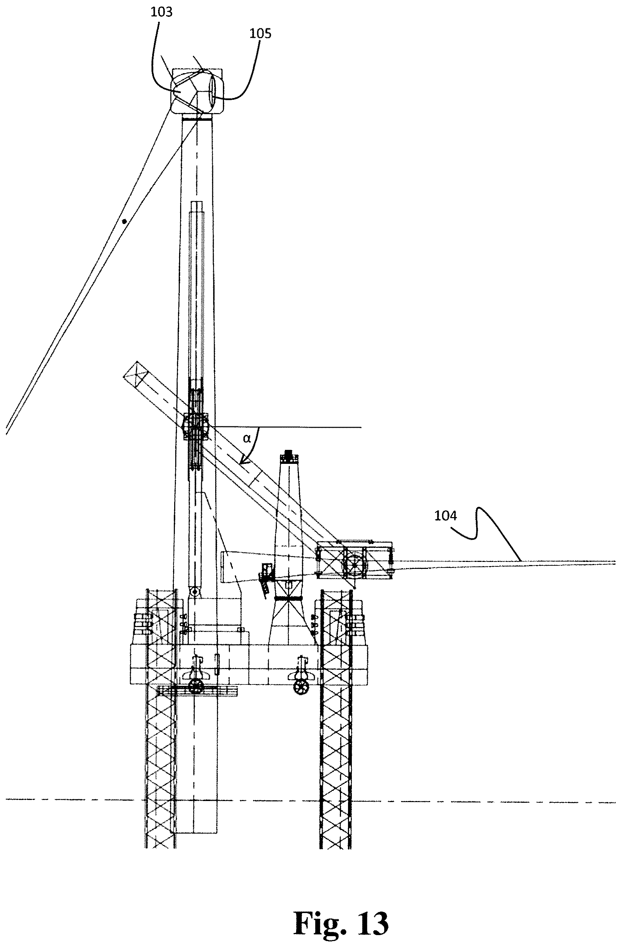

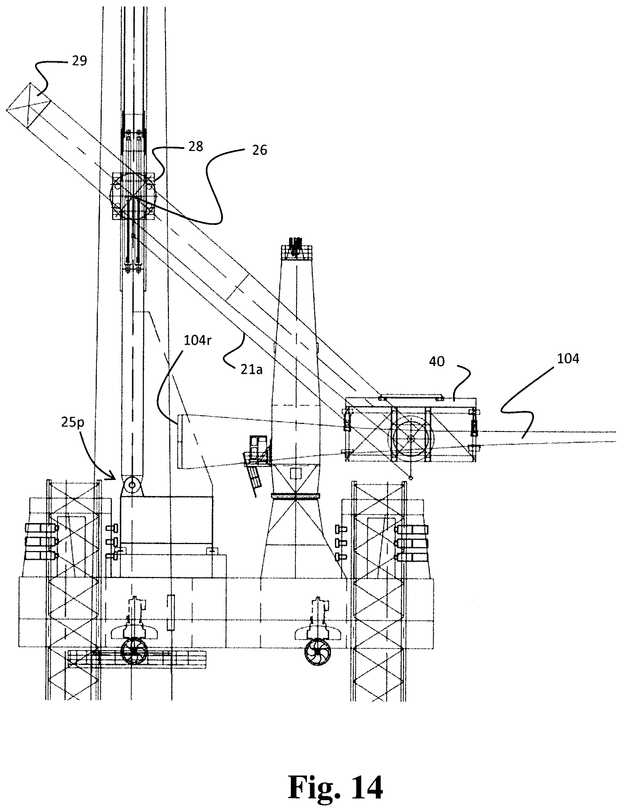

As a result of the rotation and the connection to the coupler 30, the blade 104 is now held on the free end 22 of the lift arm 21, substantially aligned with the hub 103 in the Y-direction, see figures 13 and 14. As visible in these figures, the lift arm 21 has a downwards angle α of around 40 degrees with the horizontal - and thus around 50 degrees with the mast 50.

The free end 22 of the lift arm 21 is upwardly displaceable relative to the mast 25 to an installation height of the rotor blade 104 by means of one or more lift arm drives of the blade manipulator device 20. This installation height corresponds to the height of the connection 105 of the hub 103 for the blade 104.

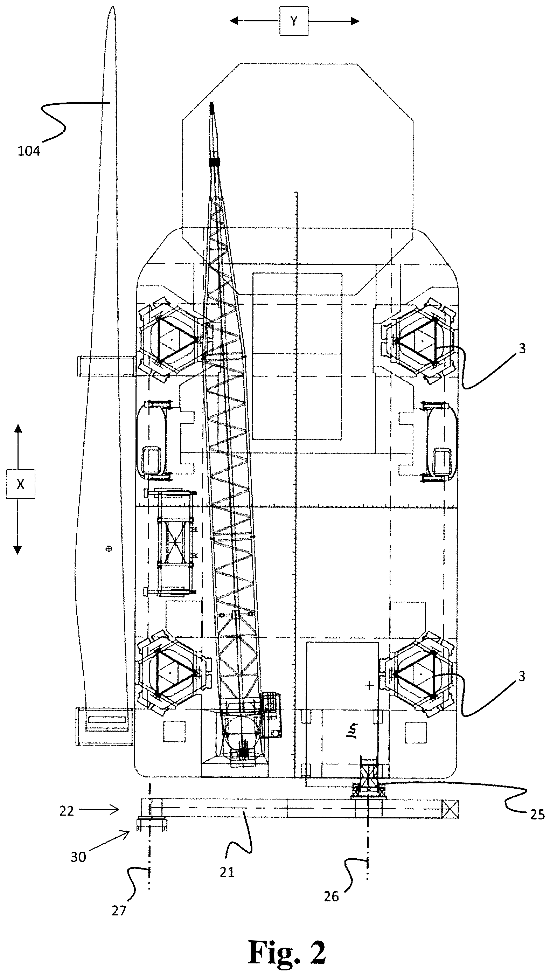

To provide this upward displaceability, the lift arm 21 is connected to the mast 25 such as to be pivotable relative to the mast 25 around a lift arm pivot axis 26 extending in the X-direction of the vessel 1, and the coupler 30 supports the rotor blade 104, via the lifting tool 40, pivotally around a parallel coupler pivot axis 27, for maintaining the horizontal orientation of the blade 104 during a pivoting of the lift arm 21 around the lift arm pivot axis 26. The blade manipulator device 20 comprises a lift arm pivot drive for driving the pivoting of the lift arm. The axes 26, 27 are indicated in figure 2.

Furthermore, the lift arm 21 is connected to the mast 25 via a driven trolley 28 that is vertically translatable along a vertical guide of the mast 25, so that driving an upwards translation of the trolley 28 upwardly translates the lifting arm 21, including the free end 22 thereof and the blade 104 held thereon, along the vertical guide, and thus along the mast 25. The blade manipulator device 20 comprises a lift arm translation drive for driving the vertical translation of the lift arm 25. The lift arm 21 may be translated upwards already over some distance prior to connection of the lifting tool 40 to the coupler 30, in order to align the coupler 30 vertically with the lifting tool 40 supported by the crane 10.

As depicted by the advancement from figure 13 and the more detailed figure 14 to figure 15, the upwardly displacing of the free end 22 of the lift arm 21 is carried out by pivoting the lift arm 21 relative to the mast 25 upwards around the lift arm pivot axis 26.

The blade 104 is held by the lifting tool at the free end 22 such as to be pivotal around the coupler pivot axis 27. Here, a bar linkage 21a, makes that the lifting tool and the blade 104 maintain the of the arm horizontal orientation during the pivoting. The same can be done with other mechanisms, e.g. using one or more actuators, e.g. hydraulic actuators, between the lifting arm and the rotatable part of the coupler holding the lifting tool.

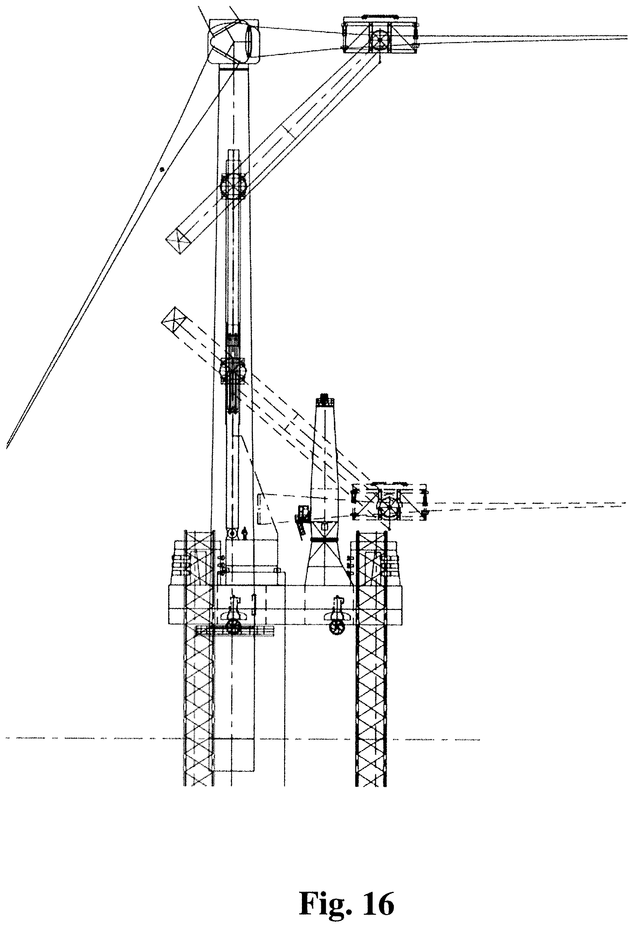

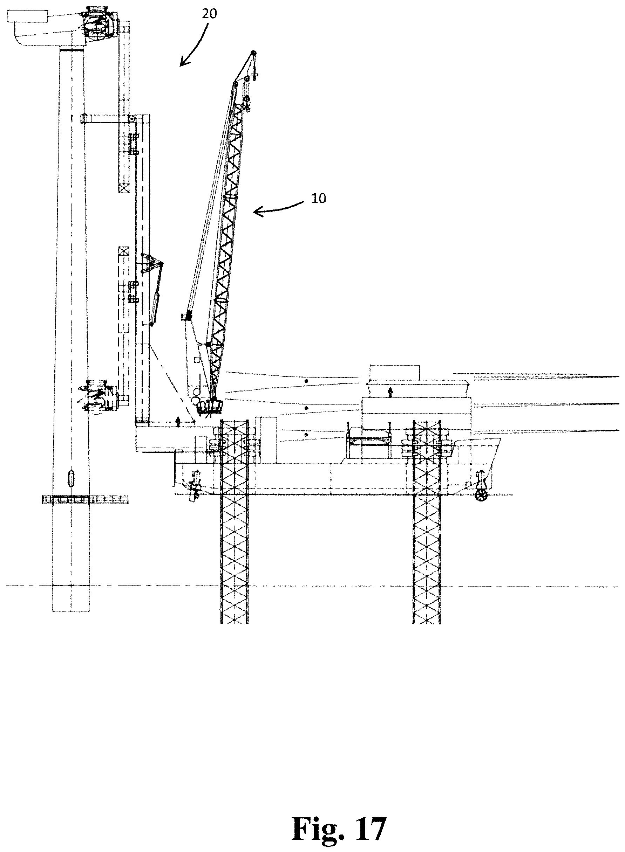

The upwardly displacing is furthermore carried out by upwardly translating the lift arm 21 along the vertical guide by driving an upwards translation of the trolley 28. The positions of the lift arm 21 before and after the pivoting are shown together in figures 16 and 17, respectively by the dashed and solid lines. The result of the upward displacement of the free end 22 is that the root 104r of the blade 104 is now substantially aligned in the Y-direction and the Z-direction with the connection 105 for the blade 104 of the hub 103.

Indicated in these figures as well, is that the lift arm 21 comprises, at a side thereof relative to the lift arm pivot axis 26 opposed to a side thereof having the coupler 30, e.g. at another free end thereof, a counterweight 29 for counteracting a force moment exerted by the rotor blade 104 to be held, e.g. of the blade 104 and the lifting tool 40 it is held by, relative to the lift arm pivot axis 26. The counterweight 29 has a weight and distance relative to the lift arm pivot axis 26 such that the center of gravity of the total of the lift arm 21 including at least the counterweight 29 and the coupler 30, the held blade 104, and if present the lifting tool 40, is at least in the Y-direction located substantially at the lift arm pivot axis 26.

The blade 104 may still need some finetuning to achieve accurate alignment of the blade root 104r with the connection 105 of the hub 103 for the blade 104. This may be done in several ways.

Firstly, the mast 25 of the blade manipulator device 20 is at its lower end pivotally mounted to the hull of the vessel 1, namely to the cantilever 5, such as to enable a pivoting of the mast 25 around a mast pivot axis 25p which runs in the X-direction of the vessel 1 over an angle of at most 3 degrees, and the vessel 1 comprises a mast pivot drive for pivoting the mast 25 around the mast pivot axis 25p. Pivoting the mast 25 slightly about this pivot axis 25p results in a small displacement of the blade in the Z- and Y-direction. This pivoting is mainly envisaged to correct a possible inaccuracy in the jacking of the vessel 1, for example a non-verticality of the jack-up legs 3. Furthermore, the cantilever 5 may be moved in the X-direction for alignment of the blade 104 in the X-direction. Alignment in the Y-direction may be established by pivoting the lift arm 21 over a small angle, and optionally vertically translating the trolley to compensate for a Z-displacement involved.

Furthermore, the blade 104 may be aligned by operating alignment means of the blade manipulator device 20 and/or the lifting tool 40 in several directions. Such alignment means may be provided on the lifting tool 40 for moving the blade 104 relative to the lifting tool. Alignment means may be provided which move the lifting tool 40 relative to the lift arm 21, alignment means which move the coupler 30 relative to the lift arm 21, and/or which move the lifting tool 40 relative to the coupler 30. Other possibilities are a rotation of the lifting tool 40 around axis 27, an adjustment of the pitch bearing and the yaw bearing of the wind turbine 100.

Not shown is that the vessel 1 may comprise sensors for measuring the distance to the wind turbine, e.g. tower 101 and/or the nacelle 102, and/or the hub 103 and/or the hub connection 105, for controlling the position of the vessel 1 and/or the blade 104 relative thereto during arranging and positioning.

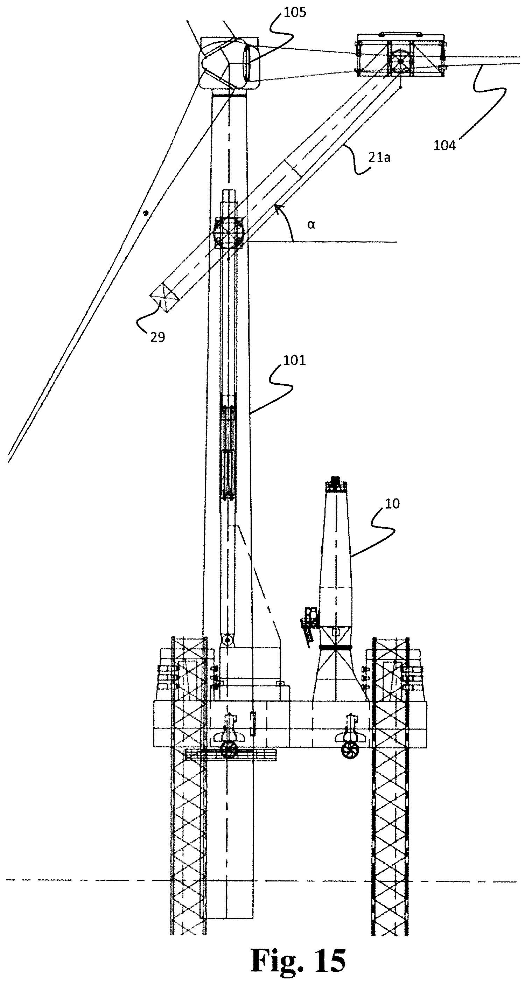

In figure 15, it is visible that after the upwardly displacing of the free end 22 of the lifting arm 21 to the installation height, the free end 22 of the lift arm 21, and therefore the coupler 30, the lifting tool 40 and the held rotor blade 104, extends higher than a top of the mast 25. Thus, the mast 25 does not need to be higher than the installation height.

In figure 16 the vessel 1 is shown with the lift arm 21 both in its position prior to the lifting of the blade 104 to the installation height, by means of the dashed lines, and in its position after this lifting, by means of the solid lines.

In figure 17, the vessel 1 is shown after lifting of the blade 104. The angle α of the lift arm 21 entails that the lift arm 21 is not fully vertical after lifting of the blade 104, and has at the height of the support arm 35 a horizontal distance in the Y-direction to the support arm 35, so that the support arm 35 is not in the way of the lift arm 21.

The length of the lift arm 21 and the position of the coupler 30 at the free end 22 thereof, are such that the rotor blade 104 can be held near or at the center of gravity of the blade 104 while the blade root 104r extends approximately aligned with the mast 25 in the X-direction, at the pivot angle α, both at the installation height and during transfer from the crane 10.

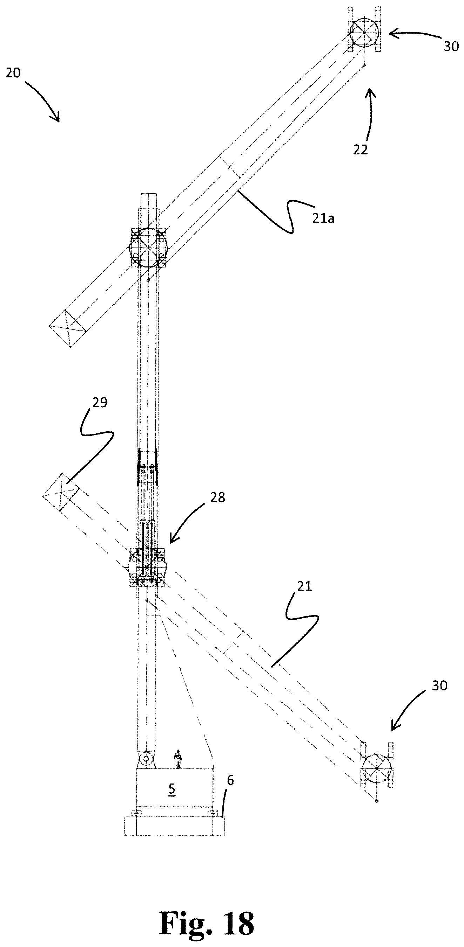

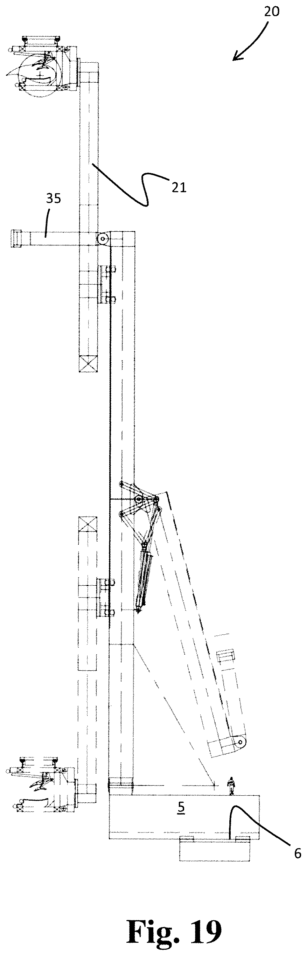

Figure 18 illustrate the blade manipulator device 20 of the vessel 1 isolated on the cantilever 5, still in a back view, with the lift arm 21 in positions prior to and after upward displacement of the free end 22. Figure 19 illustrates the same in a side view. It is visible that the lift arm 21 is not translated along the full length of the mast 25, but only over around 60% of the length. Furthermore, the collapsed position of the mast 25 is shown in dashed lines, with the support arm 35 in the retracted position. After the installation of the blade 104 and the subsequent displacement of the lift arm 21 free end 22 from the installation height back to the lower position, the support arm 35 may be retracted and the mast 25 may be collapsed for sailing of the vessel 1 to another location.

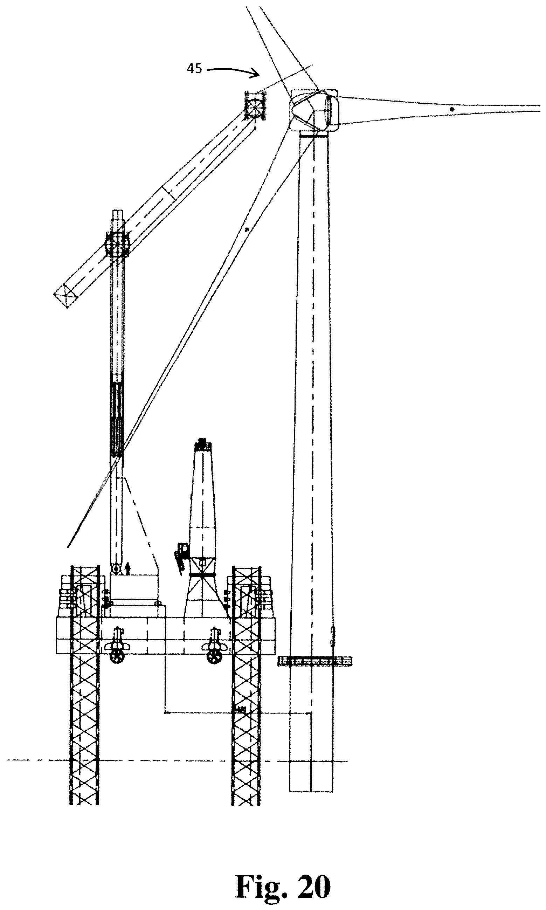

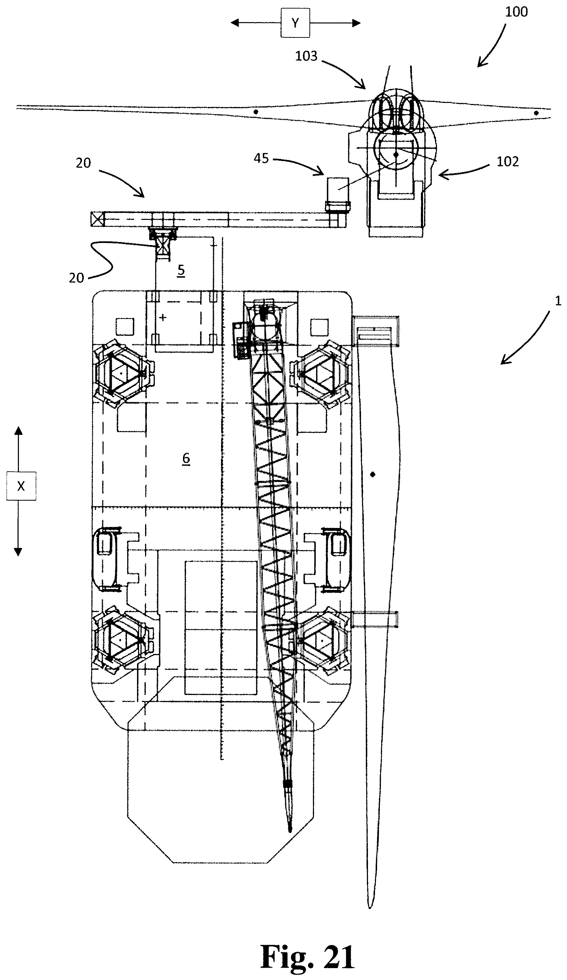

In figures 20 and 21, it is illustrated that an auxiliary lifting system 45, schematically drawn, is connected to the coupler 30, for moving smaller parts of the wind turbine 100 on or in the nacelle 102. It is noted, that for these movements, the vessel 1 is here arranged with the stern facing the turbine 100 and at a distance from the tower in the X-direction, however is not aligned with the tower 101 in the X-direction. Furthermore, it is not arranged facing the hub 103 at the front side of the turbine 100, but facing the rear side of the turbine not having the hub 103.

## Claims

1. Method for installing a rotor blade (104) onto an offshore wind turbine (100) using an installation vessel (1) having a blade manipulator device, comprising:
- arranging the vessel (1) with a stern (2) of a hull of the vessel (1) facing the wind turbine (100) and having a distance from a tower (101) of the wind turbine (100) in an X-direction of the vessel,
- holding the rotor blade (104) in a Y-direction of the vessel and horizontally on a free end (22) of a lift arm (21) of a blade manipulator device (20), the lift arm (21) being connected to a vertical mast (25) of the blade manipulator device (20), the mast (25) being mounted to the hull at the stern of the vessel,
- lifting the blade (104) towards the hub (103) of the wind turbine whilst being held horizontally and extending in the Y-direction of the vessel (1) by upwardly displacing the free end (22) of the lift arm (21), and thus the held blade (104), relative to the mast (25) to an installation height of the rotor blade (104), through actuation of one or more lift arm drives of the blade manipulator device (20),
- mounting the lifted rotor blade (104) to the hub (103) of the wind turbine (100), e.g. in a 3 o'clock position or a 9 o'clock position,
wherein the upwardly displacing of the free end (22) of the lift arm (21) is carried out by pivoting the lift arm (21) relative to the mast (25) upwards around a pivot axis (26) extending in the X-direction of the vessel (1), wherein the blade is held at the free end (22) such as to be pivotal around a parallel pivot axis (27) to maintain the horizontal orientation of the blade during said pivoting of the lift arm (21), and/or
wherein the lifting arm (21) is connected to the mast (25) via a driven trolley (28) that is vertically translatable along a vertical guide of the mast, and the upwardly displacing of the free end (22) of the lift arm (21) involves upwardly translating the lift arm (21) along the vertical guide by driving an upwards translation of the trolley (28).

2. Method according to claim 1, wherein after the upwardly displacing of the free end (22) of the lifting arm (21) to the installation height, the free end (22) of the lift arm (21), and therefore the held rotor blade (104), extends higher than a top of the mast (25).

3. Method according to claim 1 or 2, wherein the upwardly displacing involves at least the upwardly pivoting of the lift arm (21), and the lift arm (21) has an angle of between 30 and 80 degrees with the horizontal plane after the upwardly pivoting.

4. Method according to any one or more of the preceding claims, wherein the method further comprises, prior to the mounting of the rotor blade (104), aligning the blade (104) with a hub connection (105) of the hub (103) for the blade (104) by
- moving the blade (104) relative to the lift arm (21) of the blade manipulator device (20) by actuating one or more alignment actuators of an alignment mechanism of the lifting arm (21), in the X-, Y-, and/or Z-direction of the vessel (1),
and/or by
- pivoting the mast (25) of the blade manipulator device (20) relative to the vessel (1), and thereby the lift arm (21) mounted thereto, around a mast pivot axis in the X-direction of the vessel (1) at the mount of the mast (25) at the lower end thereof, e.g. over at most 3 degrees.

5. Method according to any one or more of the preceding claims, wherein the mast (25) is mounted on a cantilever (5) that is displaceable in X-direction relative to the hull, e.g. the vessel being a jack-up vessel and the cantilever being displaced towards the turbine tower after the hull of the vessel has been raised by extension of the jack-up legs of the vessel.

6. Method according any one or more of the preceding claims, wherein the method comprises, after arranging the vessel, engaging a tower (101) of the wind turbine (100) by a support arm (35) of the blade manipulator device (20) which is mounted to, and extends horizontally rearwards from, the mast (25) of the blade manipulator device (20) in the X-direction of the vessel (1), e.g. from the top of the mast, such that the blade manipulator device (20) leans with the support arm (35) against the tower (101) of the wind turbine (100), wherein, for example, the support arm (35) is mounted to the mast (25) such as to be movable, e.g. pivotable, between a retracted position in which it is aligned with the mast (25), and a rearward position in which it extends rearwards from the mast (25) in the X-direction.

7. Installation vessel (1), e.g. for use in the method according to any one or more of the preceding claims, wherein the vessel has a hull with a stern and a bow, wherein an X-direction extends horizontally from the stern to the bow, and wherein a Y-direction extends horizontally and perpendicular to the X-direction, and wherein the vessel is provided with a blade manipulator device (20) comprising a vertical mast (25) which is mounted at a lower end thereof to the hull of the vessel (1) at the stern (2) of the vessel, e.g. the mast being mounted on a cantilever, and the device (20) comprising a lift arm (21) connected to the mast (25), the lift arm having a free end (22), e.g. provided with a coupler (30), which free end is configured to support on the free end (22) a rotor blade (104), e.g. via a lifting tool (40) accommodating the blade (104), in a horizontal orientation with the longitudinal extension of the blade in the Y-direction of the vessel (1), wherein the free end (22) of the lift arm is upwardly displaceable relative to the mast (25) to an installation height of the rotor blade (104) by means of one or more lift arm drives of the blade manipulator device (20),
wherein the lift arm (21) is connected to the mast (25) such as to be pivotable relative to the mast (25) around a lift arm pivot axis (26) extending in the X-direction of the vessel (1), and the free end, e.g. the coupler (30), supports the rotor blade (104), e.g. via the lifting tool (40), pivotally around a parallel pivot axis (27), for maintaining the horizontal orientation of the blade (104) during a pivoting of the lift arm (21) around the lift arm pivot axis (26), wherein the blade manipulator device (20) comprises a lift arm pivot drive for driving the pivoting of the lift arm (21), and/or
wherein the lift arm (21) is connected to the mast (25) via a driven trolley (28) that is vertically translatable along a vertical guide of the mast (25), so that driving an upwards translation of the trolley (28) upwardly translates the lift arm (21), including the free end (22) thereof, along the vertical guide, and thus along the mast (25), wherein the blade manipulator device (20) comprises a lift arm translation drive for driving the vertical translation of the lift arm (21).

8. Vessel according to claim 7, wherein in installation positions of the lift arm (21), the free end, e.g. the coupler (30), and therefore the held rotor blade (104), is higher than a top of the mast (25).

9. Vessel according to claim 7 or 8, wherein the lift arm (21) comprises, at a side thereof relative to the lift arm pivot axis (26) opposed to the free end, a counterweight (29) for counteracting a force moment exerted by the rotor blade (104) to be held, e.g. of the blade and the lifting tool (40) it is held by, relative to the lift arm pivot axis (26), wherein, for example, the counterweight (29) has a weight and distance relative to the lift arm pivot axis (26) such that the center of gravity of the total of the lift arm (21) including at least the counterweight (29) and the coupler (30), the held blade (104), and if present the lifting tool (40), is at least in the Y-direction located substantially at the lift arm pivot axis (26).

10. Vessel according to any one or more of claims 7 - 9, wherein the coupler (30) of the blade manipulator device (20) is a lifting tool coupler, which lifting tool coupler (30) has a connector configured to connect to a blade lifting tool (40), e.g. to a rear connector of the lifting tool, so as to secure the lifting tool (40) to the coupler (30).

11. Vessel according to any one or more of the claims 7 - 10, wherein the mast (25) is mounted on a cantilever (5) that is displaceable in X-direction relative to the hull, e.g. the vessel being a jack-up vessel and the cantilever being displaced towards the turbine tower after the hull of the vessel has been raised by extension of the jack-up legs of the vessel, and/or
wherein the mast (25) of the blade manipulator device (20) is pivotally mounted to the hull of the vessel (1) such as to enable a pivoting of the mast (25) around a mast pivot axis in the X-direction of the vessel (1) over an angle of at most 3 degrees, and the vessel (1) comprises a mast pivot drive for pivoting the mast (25) around the mast pivot axis.

12. Blade manipulator device (20) for use in a method according to any one or more of claims 1 - 6 and/or on a vessel (1) according to any one or more of the claims 7 - 11, the blade manipulator device (20) comprising a vertical mast (25) which is mountable at a lower end thereof to a hull of the vessel (1), e.g. via a cantilever (5) of the blade manipulator device, and a lift arm (21) connected to the mast (25), the lift arm having a free end (22), preferably provided with a coupler (30), which free end is configured to support a rotor blade (104) in a horizontal orientation on the free end (22), wherein the free end (22) of the lift arm (21) is upwardly displaceable relative to the mast (25) to an installation height of the wind turbine blade (104) by means of one or more lift arm drives of the blade manipulator device (20),
wherein the lift arm (21) is connected to the mast (25) such as to be pivotable around a lift arm pivot axis (26) extending horizontally perpendicular to the lift arm (21), and the free end, e.g. the coupler (30), is configured to support the wind turbine blade (104), e.g. the lifting tool (40) being secured to the coupler, pivotally around a pivot axis (27) parallel to the lift arm pivot axis (26), for maintaining the horizontal orientation of the blade (104) during a pivoting of the lift arm (21), wherein the blade manipulator device (20) comprises a lift arm pivot drive for driving the pivoting of the lift arm (21).

13. Blade manipulator device (20) according to claim 12, wherein the lift arm (21) is connected to the mast (25) via a driven trolley (28) that is vertically translatable along a vertical guide of the mast (25), so that driving an upwards translation of the trolley (28) upwardly translates the lift arm (21), including the free end (22) thereof, along the vertical guide, and thus along the mast (21), wherein the blade manipulator device (20) comprises a lift arm translation drive for driving the vertical translation of the lift arm (21).

14. Lifting tool (40) for use with a device (20) according to claim 12 or 13 and/or with a vessel (1) according to any one or more of claims 7 - 11, and/or in a method according to any one or more of claims 1 - 6, which lifting tool (40) is configured for holding the rotor blade (104) horizontally, the lifting tool (40) comprising, e.g. at the top of the lifting tool (40), an attachment portion (41) for connecting the lifting tool (40) to an object suspension device (11) of a crane (10), e.g. to a crane hook, and comprising, e.g. at a rear side of the lifting tool (40), a connector (42) for securing the lifting tool (40) to a coupler (30) of a blade manipulator device (20), e.g. to a connector (31) of a coupler (30) mounted at the free end of a pivotal lifting arm (27).

15. System of a coupler (30) and of a blade lifting tool (40) according to claim 14, e.g. for use with a device (20) according to claim 12 or 13 and/or with an installation vessel (1) according to any one or more of claims 7 - 11, e.g. in a method according to any one or more of claims 1 - 6, wherein the coupler (30) of the blade manipulator device (20) is a lifting tool coupler, which has a connector (31) configured to connect to a connector (42) of the lifting tool (40) so as to secure the lifting tool (40) to the coupler (30), and wherein the coupler (30) is configured to be mounted to a lift arm (21) of a blade manipulator device.

## Patentansprüche

1. Verfahren zum Installieren eines Rotorblatts (104) auf einer Offshore-Windenergieanlage (100) unter Verwendung eines Installationsschiffs (1) mit einer Blattmanipulatorvorrichtung, umfassend:
- Anordnen des Schiffs (1) mit einem Heck (2) eines Rumpfs des Schiffs (1) der Windenergieanlage (100) zugewandt und mit einem Abstand von einem Turm (101) der Windenergieanlage (100) in einer X-Richtung des Schiffs,
- Halten des Rotorblatts (104) in einer Y-Richtung des Schiffs und horizontal auf einem freien Ende (22) eines Hebearms (21) einer Blattmanipulatorvorrichtung (20), wobei der Hebearm (21) mit einem vertikalen Mast (25) der Blattmanipulatorvorrichtung (20) verbunden ist, wobei der Mast (25) an dem Rumpf am Heck des Schiffs montiert ist,
- Anheben des Blatts (104) in Richtung der Nabe (103) der Windenergieanlage, während es horizontal gehalten wird und sich in der Y-Richtung des Schiffs (1) erstreckt, durch Aufwärtsverschieben des freien Endes (22) des Hebearms (21) und somit des gehaltenen Blatts (104) relativ zu dem Mast (25) auf eine Installationshöhe des Rotorblatts (104) durch Betätigung eines oder mehrerer Hebearmantriebe der Blattmanipulatorvorrichtung (20),
- Montieren des angehobenen Rotorblatts (104) an der Nabe (103) der Windenergieanlage (100), z. B. in einer 3-Uhr-Position oder einer 9-Uhr-Position,
wobei das Aufwärtsverschieben des freien Endes (22) des Hebearms (21) durch Aufwärtsschwenken des Hebearms (21) relativ zu dem Mast (25) um eine sich in der X-Richtung des Schiffs (1) erstreckende Schwenkachse (26) ausgeführt wird, wobei das Blatt an dem freien Ende (22) derart gehalten wird, dass es um eine parallele Schwenkachse (27) schwenkbar ist, um die horizontale Ausrichtung des Blatts während des Schwenkens des Hebearms (21) beizubehalten, und/oder
wobei der Hebearm (21) mit dem Mast (25) über eine angetriebene Laufkatze (28) verbunden ist, die entlang einer vertikalen Führung des Masts vertikal translatorisch bewegbar ist, und wobei das Aufwärtsverschieben des freien Endes (22) des Hebearms (21) ein translatorisches Aufwärtsbewegen des Hebearms (21) entlang der vertikalen Führung durch Antreiben einer Aufwärtstranslation der Laufkatze (28) umfasst.

2. Verfahren nach Anspruch 1, wobei nach dem Aufwärtsverschieben des freien Endes (22) des Hebearms (21) auf die Installationshöhe sich das freie Ende (22) des Hebearms (21) und damit das gehaltene Rotorblatt (104) höher erstreckt als eine Oberseite des Masts (25).

3. Verfahren nach Anspruch 1 oder 2, wobei das Aufwärtsverschieben zumindest das Aufwärtsschwenken des Hebearms (21) umfasst und der Hebearm (21) nach dem Aufwärtsschwenken einen Winkel zwischen 30 und 80 Grad mit der horizontalen Ebene aufweist.

4. Verfahren nach einem oder mehreren der vorhergehenden Ansprüche, wobei das Verfahren ferner vor dem Montieren des Rotorblatts (104) Ausrichten des Blatts (104) mit einer Nabenverbindung (105) der Nabe (103) für das Blatt (104) durch Folgendes umfasst
- Bewegen des Blatts (104) relativ zu dem Hebearm (21) der Blattmanipulatorvorrichtung (20) durch Betätigen eines oder mehrerer Ausrichtungsaktuatoren eines Ausrichtungsmechanismus des Hebearms (21) in der X-, Y- und/oder Z-Richtung des Schiffs (1),
und/oder durch
- Schwenken des Masts (25) der Blattmanipulatorvorrichtung (20) relativ zu dem Schiff (1) und dadurch des daran montierten Hebearms (21) um eine Mastschwenkachse in der X-Richtung des Schiffs (1) an der Halterung des Masts (25) an dem unteren Ende davon, **z. B.** über höchstens 3 Grad.

5. Verfahren nach einem oder mehreren der vorhergehenden Ansprüche, wobei der Mast (25) auf einem Ausleger (5) montiert ist, der in X-Richtung relativ zu dem Rumpf verschiebbar ist, wobei z. B. das Schiff ein Hubschiff ist und der Ausleger in Richtung des Turbinenturms verschoben wird, nachdem der Rumpf des Schiffs durch Ausfahren der Hubbeine des Schiffs angehoben wurde.

6. Verfahren nach einem oder mehreren der vorhergehenden Ansprüche, wobei das Verfahren nach dem Anordnen des Schiffs Ineingriffbringen eines Turms (101) der Windenergieanlage (100) durch einen Stützarm (35) der Blattmanipulatorvorrichtung (20) umfasst, der an dem Mast (25) der Blattmanipulatorvorrichtung (20) montiert ist und sich davon in der X-Richtung des Schiffs (1) horizontal nach hinten, z. B. von der Oberseite des Masts, so erstreckt, dass sich die Blattmanipulatorvorrichtung (20) mit dem Stützarm (35) gegen den Turm (101) der Windenergieanlage (100) lehnt, wobei zum Beispiel der Stützarm (35) an dem Mast (25) so montiert ist, dass er beispielsweise zwischen einer eingefahrenen Position, in der er mit dem Mast (25) ausgerichtet ist, und einer hinteren Position, in der er sich von dem Mast (25) in der X-Richtung nach hinten erstreckt, beweglich, z. B. schwenkbar ist.

7. Installationsschiff (1), z. B. zur Verwendung in dem Verfahren nach einem oder mehreren der vorhergehenden Ansprüche, wobei das Schiff einen Rumpf mit einem Heck und einem Bug aufweist, wobei sich eine X-Richtung horizontal von dem Heck zu dem Bug erstreckt, und wobei sich eine Y-Richtung horizontal und senkrecht zu der X-Richtung erstreckt, und wobei das Schiff mit einer Blattmanipulatorvorrichtung (20) versehen ist, die einen vertikalen Mast (25) umfasst, der an einem unteren Ende davon an dem Rumpf des Schiffs (1) an dem Heck (2) des Schiffs montiert ist, wobei z. B. der Mast auf einem Ausleger montiert ist, und wobei die Vorrichtung (20) einen mit dem Mast (25) verbundenen Hebearm (21) umfasst, wobei der Hebearm ein freies Ende (22) aufweist, das z. B. mit einer Kopplung (30) versehen ist, wobei das freie Ende dazu ausgelegt ist, auf dem freien Ende (22) ein Rotorblatt (104), z. B. über ein das Blatt (104) aufnehmendes Hebewerkzeug (40), in einer horizontalen Ausrichtung mit der Längserstreckung des Blatts in der Y-Richtung des Schiffs (1) abzustützen, wobei das freie Ende (22) des Hebearms mittels eines oder mehrerer Hebearmantriebe der Blattmanipulatorvorrichtung (20) relativ zu dem Mast (25) auf eine Installationshöhe des Rotorblatts (104) aufwärts verschiebbar ist,
wobei der Hebearm (21) mit dem Mast (25) so verbunden ist, dass er relativ zu dem Mast (25) um eine Hebearmschwenkachse (26) schwenkbar ist, die sich in der X-Richtung des Schiffs (1) erstreckt, und wobei das freie Ende, z. B. die Kopplung (30), das Rotorblatt (104), z. B. über das Hebewerkzeug (40), um eine parallele Schwenkachse (27) schwenkbar abstützt, um die horizontale Ausrichtung des Blattes (104) während eines Schwenkens des Hebearms (21) um die Hebearmschwenkachse (26) beizubehalten, wobei die Blattmanipulatorvorrichtung (20) einen Hebearmschwenkantrieb zum Antreiben des Hebearms (21) umfasst, und/oder
wobei der Hebearm (21) mit dem Mast (25) über eine angetriebene Laufkatze (28) verbunden ist, die entlang einer vertikalen Führung des Masts (25) vertikal translatorisch bewegbar ist, so dass ein Antreiben einer Aufwärtstranslation der Laufkatze (28) den Hebearm (21) einschließlich des freien Endes (22) davon entlang der vertikalen Führung und somit entlang des Masts (25) translatorisch aufwärts bewegt, wobei die Blattmanipulatorvorrichtung (20) einen Hebearmtranslationsantrieb zum Antreiben der vertikalen Translation des Hebearms (21) umfasst.

8. Schiff nach Anspruch 7, wobei in Installationspositionen des Hebearms (21) das freie Ende, z. **B.** die Kopplung (30), und damit das gehaltene Rotorblatt (104) höher liegt als eine Oberseite des Masts (25).

9. Schiff nach Anspruch 7 oder 8, wobei der Hebearm (21) an einer Seite davon, die relativ zu der Hebearmschwenkachse (26) dem freien Ende gegenüberliegt, ein Gegengewicht (29) zum Gegenwirken eines Kraftmoments umfasst, das durch das zu haltende Rotorblatt (104), z. B. von dem Blatt und dem Hebewerkzeug (40), durch das es gehalten wird, relativ zu der Hebearmschwenkachse (26) ausgeübt wird, wobei zum Beispiel das Gegengewicht (29) ein Gewicht und einen Abstand relativ zu der Hebearmschwenkachse (26) aufweist, so dass sich der Schwerpunkt der Gesamtheit des Hebearms (21) einschließlich mindestens des Gegengewichts (29) und der Kopplung (30), des gehaltenen Blatts (104) und, falls vorhanden, des Hebewerkzeugs (40) zumindest in der Y-Richtung im Wesentlichen an der Hebearmschwenkachse (26) befindet.

10. Schiff nach einem oder mehreren der Ansprüche 7-9, wobei die Kopplung (30) der Blattmanipulatorvorrichtung (20) eine Hebewerkzeugkopplung ist, wobei die Hebewerkzeugkopplung (30) einen Verbinder aufweist, der dazu ausgelegt ist, sich mit einem Blatthebewerkzeug (40), z. B. mit einem hinteren Verbinder des Hebewerkzeugs, zu verbinden, um das Hebewerkzeug (40) an der Kopplung (30) zu sichern.

11. Schiff nach einem oder mehreren der Ansprüche 7-10, wobei der Mast (25) auf einem Ausleger (5) montiert ist, der in X-Richtung relativ zu dem Rumpf verschiebbar ist, wobei z. B. das Schiff ein Hubschiff ist und der Ausleger in Richtung des Turbinenturms verschoben wird, nachdem der Rumpf des Schiffs durch Ausfahren der Hubbeine des Schiffs angehoben wurde, und/oder
wobei der Mast (25) der Blattmanipulatorvorrichtung (20) schwenkbar an dem Rumpf des Schiffs (1) montiert ist, um ein Schwenken des Masts (25) um eine Mastschwenkachse in der X-Richtung des Schiffs (1) über einen Winkel von höchstens 3 Grad zu ermöglichen, und wobei das Schiff (1) einen Mastschwenkantrieb zum Schwenken des Masts (25) um die Mastschwenkachse umfasst.

12. Blattmanipulatorvorrichtung (20) zur Verwendung in einem Verfahren nach einem oder mehreren der Ansprüche 1-6 und/oder auf einem Schiff (1) nach einem oder mehreren der Ansprüche 7-11, wobei die Blattmanipulatorvorrichtung (20) einen vertikalen Mast (25), der an einem unteren Ende davon an einem Rumpf des Schiffs (1), z. B. über einen Ausleger (5) der Blattmanipulatorvorrichtung, montierbar ist, und einen mit dem Mast (25) verbundenen Hebearm (21) umfasst, wobei der Hebearm ein freies Ende (22) aufweist, das vorzugsweise mit einer Kopplung (30) versehen ist, wobei das freie Ende dazu ausgelegt ist, ein Rotorblatt (104) in einer horizontalen Ausrichtung auf dem freien Ende (22) abzustützen, wobei das freie Ende (22) des Hebearms (21) mittels eines oder mehrerer Hebearmantriebe der Blattmanipulatorvorrichtung (20) relativ zu dem Mast (25) auf eine Installationshöhe des Windenergieanlagenblatts (104) aufwärts verschiebbar ist,
wobei der Hebearm (21) mit dem Mast (25) so verbunden ist, dass er um eine Hebearmschwenkachse (26) schwenkbar ist, die sich horizontal senkrecht zu dem Hebearm (21) erstreckt, und wobei das freie Ende, z. B. die Kopplung (30), dazu ausgelegt ist, das Windenergieanlagenblatt (104), z. B. das Hebewerkzeug (40), das an der Kopplung gesichert ist, um eine Schwenkachse (27) parallel zu der Hebearmschwenkachse (26) schwenkbar abzustützen, um die horizontale Ausrichtung des Blatts (104) während eines Schwenkens des Hebearms (21) beizubehalten, wobei die Blattmanipulatorvorrichtung (20) einen Hebearmschwenkantrieb zum Antreiben des Hebearms (21) umfasst.

13. Blattmanipulatorvorrichtung (20) nach Anspruch 12, wobei der Hebearm (21) mit dem Mast (25) über eine angetriebene Laufkatze (28) verbunden ist, die entlang einer vertikalen Führung des Masts (25) vertikal translatorisch bewegbar ist, so dass ein Antreiben einer Aufwärtstranslation der Laufkatze (28) den Hebearm (21) einschließlich des freien Endes (22) davon entlang der vertikalen Führung und somit entlang des Masts (21) translatorisch aufwärts bewegt, wobei die Blattmanipulatorvorrichtung (20) einen Hebearmtranslationsantrieb zum Antreiben der vertikalen Translation des Hebearms (21) umfasst.

14. Hebewerkzeug (40) zur Verwendung mit einer Vorrichtung (20) nach Anspruch 12 oder 13 und/oder mit einem Schiff (1) nach einem oder mehreren der Ansprüche 7-11 und/oder in einem Verfahren nach einem oder mehreren der Ansprüche 1-6, wobei das Hebewerkzeug (40) dazu ausgelegt ist, das Rotorblatt (104) horizontal zu halten, wobei das Hebewerkzeug (40), z. B. an der Oberseite des Hebewerkzeugs (40), einen Befestigungsabschnitt (41) zum Verbinden des Hebewerkzeugs (40) mit einer Objektaufhängungsvorrichtung (11) eines Krans (10), z. B. mit einem Kranhaken, umfasst, und, z. B. an einer hinteren Seite des Hebewerkzeugs (40), einen Verbinder (42) zum Sichern des Hebewerkzeugs (40) an einer Kopplung (30) einer Blattmanipulatorvorrichtung (20), z. B. an einem Verbinder (31) einer Kopplung (30), die an dem freien Ende eines schwenkbaren Hebearms (27) montiert ist, umfasst.

15. System aus einer Kopplung (30) und einem Blatthebewerkzeug (40) nach Anspruch 14, z. B. zur Verwendung mit einer Vorrichtung (20) nach Anspruch 12 oder 13 und/oder mit einem Installationsschiff (1) nach einem oder mehreren der Ansprüche 7-11, z. B. in einem Verfahren nach einem oder mehreren der Ansprüche 1-6, wobei die Kopplung (30) der Blattmanipulatorvorrichtung (20) eine Hebewerkzeugkopplung ist, die einen Verbinder (31) aufweist, der dazu ausgelegt ist, mit einem Verbinder (42) des Hebewerkzeugs (40) verbunden zu sein, um das Hebewerkzeug (40) an der Kopplung (30) zu sichern, und wobei die Kopplung (30) dazu ausgelegt ist, an einem Hebearm (21) einer Blattmanipulatorvorrichtung montiert zu sein.

## Revendications

1. Procédé d'installation d'une pale de rotor (104) sur une éolienne offshore (100) à l'aide d'un navire d'installation (1) muni d'un dispositif manipulateur de pale, comprenant les étapes consistant à :
- mettre en place le navire (1) avec une poupe (2) d'une coque du navire (1) faisant face à l'éolienne (100) et à une distance d'une tour (101) de l'éolienne (100) dans une direction X du navire,
- maintenir la pale de rotor (104) dans une direction Y du navire et horizontalement sur une extrémité libre (22) d'un bras de levage (21) d'un dispositif manipulateur de pale (20), le bras de levage (21) étant relié à un mât vertical (25) du dispositif manipulateur de pale (20), le mât (25) étant monté sur la coque au niveau de la poupe du navire,
- lever la pale (104) vers le moyeu (103) de l'éolienne tout en la maintenant horizontalement et en l'étendant dans la direction Y du navire (1) en déplaçant vers le haut l'extrémité libre (22) du bras de levage (21), et ainsi la pale (104) maintenue, par rapport au mât (25) à une hauteur d'installation de la pale de rotor (104), par l'actionnement d'un ou de plusieurs entraînements de bras de bras de levage du dispositif manipulateur de pale (20),
- monter la pale de rotor (104) levée sur le moyeu (103) de l'éolienne (100), par exemple en position 3 heures ou 9 heures,
le déplacement vers le haut de l'extrémité libre (22) du bras de levage (21) s'effectuant par pivotement du bras de levage (21) par rapport au mât (25) vers le haut autour d'un axe de pivotement (26) s'étendant dans la direction X du navire (1), la pale étant maintenue au niveau de l'extrémité libre (22) de sorte à pouvoir pivoter autour d'un axe de pivotement parallèle (27) pour maintenir l'orientation horizontale de la pale pendant ledit pivotement du bras de levage (21), et/ou
le bras de levage (21) étant relié au mât (25) par l'intermédiaire d'un chariot entraîné (28) qui peut être translaté verticalement le long d'un guide vertical du mât, et le déplacement vers le haut de l'extrémité libre (22) du bras de levage (21) impliquant une translation vers le haut du bras de levage (21) le long du guide vertical par entraînement d'une translation vers le haut du chariot (28).

2. Procédé selon la revendication 1, après le déplacement vers le haut de l'extrémité libre (22) du bras de levage (21) à la hauteur d'installation, l'extrémité libre (22) du bras de levage (21), et ainsi la pale de rotor (104) maintenue, s'étendant plus haut qu'un sommet du mât (25).

3. Procédé selon la revendication 1 ou 2, le déplacement vers le haut impliquant au moins le pivotement vers le haut du bras de levage (21), et le bras de levage (21) présentant un angle compris entre 30 et 80 degrés avec le plan horizontal après le pivotement vers le haut.

4. Procédé selon l'une quelconque ou plusieurs des revendications précédentes, le procédé comprenant en outre, avant le montage de la pale de rotor (104), l'étape consistant à aligner la pale (104) avec une liaison de moyeu (105) du moyeu (103) pour la pale (104) par les étapes consistant à
- déplacer la pale (104) par rapport au bras de levage (21) du dispositif manipulateur de pale (20) en actionnant un ou plusieurs actionneurs d'alignement d'un mécanisme d'alignement du bras de levage (21), dans la direction X, Y et/ou Z du navire (1),
et/ou
- faire pivoter le mât (25) du dispositif manipulateur de pales (20) par rapport au navire (1), et ainsi le bras de levage (21) monté sur celui-ci, autour d'un axe de pivotement de mât dans la direction X du navire (1) au niveau du support du mât (25) au niveau de l'extrémité inférieure de celui-ci, par exemple sur au plus 3 degrés.

5. Procédé selon l'une quelconque ou plusieurs des revendications précédentes, le mât (25) étant monté sur un porte-à-faux (5) qui peut être déplacé dans la direction X par rapport à la coque, par exemple le navire étant un navire auto-élévateur et le porte-à-faux étant déplacé vers la tour éolienne après que la coque du navire a été levée par extension des jambes auto-élévatrices du navire.

6. Procédé selon l'une quelconque ou plusieurs des revendications précédentes, le procédé comprenant, après la mise en place du navire, l'étape consistant à mettre en prise une tour (101) de l'éolienne (100) par un bras de support (35) du dispositif manipulateur de pale (20) qui est monté sur le mât (25) du dispositif manipulateur de pale (20) et s'étend horizontalement vers l'arrière depuis celui-ci, dans la direction X du navire (1), par exemple depuis le sommet du mât, de sorte que le dispositif manipulateur de pale (20) s'appuie avec le bras de support (35) contre la tour (101) de l'éolienne (100), par exemple le bras de support (35) étant monté sur le mât (25) de sorte à être mobile, par exemple à pouvoir pivoter, entre une position rétractée dans laquelle il est aligné avec le mât (25) et une position vers l'arrière dans laquelle il s'étend vers l'arrière à partir du mât (25) dans la direction X.

7. Navire d'installation (1), par exemple destiné à être utilisé dans le procédé selon l'une quelconque ou plusieurs des revendications précédentes, le navire comprenant une coque comportant une poupe et une proue, une direction X s'étendant horizontalement de la poupe à la proue, et une direction Y s'étendant horizontalement et perpendiculairement à la direction X, et le navire étant muni d'un dispositif manipulateur de pale (20) comprenant un mât vertical (25) qui est monté au niveau d'une extrémité inférieure de celui-ci sur la coque du navire (1) au niveau de la poupe (2) du navire, par exemple le mât étant monté sur un porte-à-faux, et le dispositif (20) comprenant un bras de levage (21) relié au mât (25), le bras de levage ayant une extrémité libre (22), par exemple munie d'un accouplement (30), laquelle extrémité libre est conçue pour supporter sur l'extrémité libre (22) une pale de rotor (104), par exemple par l'intermédiaire d'un outil de levage (40) recevant la pale (104), dans une orientation horizontale avec l'extension longitudinale de la pale dans la direction Y du navire (1), l'extrémité libre (22) du bras de levage pouvant être déplacée vers le haut par rapport au mât (25) jusqu'à une hauteur d'installation de la pale de rotor (104) au moyen d'un ou de plusieurs entraînements de bras de levage du dispositif manipulateur de pale (20),
le bras de levage (21) étant relié au mât (25) de sorte à pouvoir pivoter par rapport au mât (25) autour d'un axe de pivotement de bras de levage (26) s'étendant dans la direction X du navire (1), et l'extrémité libre, par exemple l'accouplement (30), supportant la pale de rotor (104), par exemple par l'intermédiaire de l'outil de levage (40), de manière pivotante autour d'un axe de pivotement parallèle (27), afin de maintenir l'orientation horizontale de la pale (104) pendant un pivotement du bras de levage (21) autour de l'axe de pivotement de bras de levage (26), le dispositif manipulateur de pale (20) comprenant un entraînement de pivotement de bras de levage pour entraîner le pivotement du bras de levage (21), et/ou
le bras de levage (21) étant relié au mât (25) par l'intermédiaire d'un chariot entraîné (28) qui peut être translaté verticalement le long d'un guide vertical du mât (25), de sorte que l'entraînement d'une translation vers le haut du chariot (28) translate vers le haut le bras de levage (21), y compris son extrémité libre (22), le long du guide vertical, et ainsi le long du mât (25), le dispositif manipulateur de pale (20) comprenant un entraînement de translation de bras de levage pour entraîner la translation verticale du bras de levage (21).

8. Navire selon la revendication 7, dans les positions d'installation du bras de levage (21), l'extrémité libre, par exemple l'accouplement (30), et ainsi la pale de rotor (104) maintenue, étant plus haute qu'un sommet du mât (25).

9. Navire selon la revendication 7 ou 8, le bras de levage (21) comprenant, sur un côté de celui-ci par rapport à l'axe de pivotement de bras de levage (26) opposé à l'extrémité libre, un contrepoids (29) pour contrecarrer un couple de force exercé par la pale de rotor (104) à maintenir, par exemple de la pale et de l'outil de levage (40) par rapport à l'axe de pivotement de bras de levage (26), le contrepoids (29) présentant un poids et une distance par rapport à l'axe de pivotement (26) du bras de levage tels que le centre de gravité de l'ensemble du bras de levage (21) comprenant au moins le contrepoids (29) et l'accouplement (30), la pale (104) maintenue et, le cas échéant, l'outil de levage (40), se trouve au moins dans la direction Y sensiblement au niveau de l'axe de pivotement de bras de levage (26).

10. Navire selon l'une quelconque ou plusieurs des revendications 7 à 9, l'accouplement (30) du dispositif manipulateur de pale (20) étant un accouplement d'outil de levage, lequel accouplement d'outil de levage (30) ayant un raccord conçu pour se raccorder à un outil de levage de pale (40), par exemple à un raccord arrière de l'outil de levage, de sorte à fixer l'outil de levage (40) à l'accouplement (30).

11. Navire selon l'une quelconque ou plusieurs des revendications 7 à 10, le mât (25) étant monté sur un porte-à-faux (5) qui peut être déplacé dans la direction X par rapport à la coque, par exemple le navire étant un navire auto-élévateur et le porte-à-faux étant déplacé vers la tour éolienne après que la coque du navire a été levée par extension des jambes auto-élévatrices du navire, et/ou
le mât (25) du dispositif manipulateur de pale (20) étant monté pivotant sur la coque du navire (1) de sorte à permettre un pivotement du mât (25) autour d'un axe de pivotement de mât dans la direction X du navire (1) sur un angle d'au plus 3 degrés, et le navire (1) comprenant un entraînement de pivotement de mât pour faire pivoter le mât (25) autour de l'axe de pivotement de mât.

12. Dispositif manipulateur de pale (20) destiné à être utilisé dans un procédé selon l'une quelconque ou plusieurs des revendications 1 à 6 et/ou sur un navire (1) selon l'une quelconque ou plusieurs des revendications 7 à 11, le dispositif manipulateur de pale (20) comprenant un mât vertical (25) qui peut être monté au niveau d'une extrémité inférieure de celui-ci sur une coque du navire (1), par exemple par l'intermédiaire d'un porte-à-faux (5) du dispositif manipulateur de pale, et un bras de levage (21) relié au mât (25), le bras de levage ayant une extrémité libre (22), de préférence munie d'un accouplement (30), laquelle extrémité libre est conçue pour supporter une pale de rotor (104) dans une orientation horizontale sur l'extrémité libre (22), l'extrémité libre (22) du bras de levage (21) pouvant être déplacée vers le haut par rapport au mât (25) jusqu'à une hauteur d'installation de la pale d'éolienne (104) au moyen d'un ou de plusieurs entraînements de bras de levage du dispositif manipulateur de pale (20),
le bras de levage (21) étant relié au mât (25) de sorte à pouvoir pivoter autour d'un axe de pivotement de bras de levage (26) s'étendant horizontalement perpendiculairement au bras de levage (21), et l'extrémité libre, par exemple l'accouplement (30), étant conçue pour supporter la pale d'éolienne (104), par exemple l'outil de levage (40) étant fixé à l'accouplement, de manière pivotante autour d'un axe de pivotement (27) parallèle à l'axe de pivotement de bras de levage (26), afin de maintenir l'orientation horizontale de la pale (104) pendant un pivotement du bras de levage (21), le dispositif manipulateur de pale (20) comprenant un entraînement de pivotement de bras de levage pour entraîner le pivotement du bras de levage (21).

13. Dispositif manipulateur de pale (20) selon la revendication 12, le bras de levage (21) étant relié au mât (25) par l'intermédiaire d'un chariot entraîné (28) qui peut être translaté verticalement le long d'un guide vertical du mât (25), de sorte que l'entraînement d'une translation vers le haut du chariot (28) translate vers le haut le bras de levage (21), y compris son extrémité libre (22), le long du guide vertical, et ainsi le long du mât (21), le dispositif manipulateur de pale (20) comprenant un entraînement de translation de bras de levage pour entraîner la translation verticale du bras de levage (21).

14. Outil de levage (40) destiné à être utilisé avec un dispositif (20) selon la revendication 12 ou 13 et/ou avec un navire (1) selon l'une quelconque ou plusieurs des revendications 7 à 11, et/ou dans un procédé selon l'une quelconque ou plusieurs des revendications 1 à 6, ledit outil de levage (40) étant conçu pour maintenir horizontalement la pale de rotor (104), l'outil de levage (40) comprenant, par exemple au sommet de l'outil de levage (40), une partie de fixation (41) pour relier l'outil de levage (40) à un dispositif de suspension d'objet (11) d'une grue (10), par exemple à un crochet de grue, et comprenant, par exemple sur un côté arrière de l'outil de levage (40), un raccord (42) pour fixer l'outil de levage (40) à un accouplement (30) d'un dispositif manipulateur de pale (20), par exemple à un raccord (31) d'un accouplement (30) monté à l'extrémité libre d'un bras de levage pivotant (27).

15. Système d'un accouplement (30) et d'un outil de levage de pale (40) selon la revendication 14, par exemple destiné à être utilisé avec un dispositif (20) selon la revendication 12 ou 13 et/ou avec un navire d'installation (1) selon l'une quelconque ou plusieurs des revendications 7 à 11, par exemple dans un procédé selon l'une quelconque ou plusieurs des revendications 1 à 6, l'accouplement (30) du dispositif manipulateur de pale (20) étant un accouplement d'outil de levage, qui a un raccord (31) conçu pour être relié à un raccord (42) de l'outil de levage (40) de sorte à fixer l'outil de levage (40) à l'accouplement (30), et l'accouplement (30) étant conçu pour être monté sur un bras de levage (21) d'un dispositif manipulateur de pale.
